# EUROPEAN PATENT APPLICATION

(11) **EP 4 333 545 A1**
(43) Date of publication of application: **06.03.2024**
(21) Application number: 21942377.9
(22) Date of filing: 28.05.2021
(51) Int. Cl.: H04W 76/15, H04W 8/22

(54) **ACCESS METHOD AND COMMUNICATION APPARATUS**

(71) Applicant: Huawei Digital Power Technologies Co., Ltd., Shenzhen, Guangdong 518129 (CN)
(72) Inventor: CHENG, Xingqing, Shenzhen, Guangdong 518129 (CN); GAO, Lei, Shenzhen, Guangdong 518129 (CN); WANG, Jian, Shenzhen, Guangdong 518129 (CN); YANG, Changqing, Shenzhen, Guangdong 518129 (CN)
(74) Representative: Pfenning, Meinig & Partner mbB
(86) International application number: PCT/CN2021/096783
(87) International publication number: WO 2022/246803

(57) **Abstract**

This application provides an access method and a communication apparatus, applied to the communication field, and in particular, to the field of short-range communication. The access method includes: sending first broadcast information based on a target access mode, where the first broadcast information indicates that a broadcast type is connectable; and if a first access request from a first device is received within first preset duration, sending first response information for the first access request, where the target access mode is an access mode in an access mode set, and the access mode set includes at least two access modes. Through configuration of the at least two access modes, access modes can be selected in different scenarios, to shorten time for subsequently establishing a connection between the first device and a second device, reduce power consumption of the first device or the second device, and improve efficiency in establishing the connection between the first device and the second device.

## Description

### TECHNICAL FIELD

This application relates to the field of communication technologies, and more specifically, relates to an access method and a communication apparatus, and in particular, to the field of short-range communication technologies.

### BACKGROUND

In an existing communication system, nodes in the communication system can be classified into primary nodes and secondary nodes based on logical functions. The primary node manages the secondary node, has a function of allocating communication domain resources, and is responsible for allocating resources to the secondary node. The secondary node follows scheduling of the primary node, and communicates with the primary node by using the resources allocated by the primary node.

Currently, a primary node and a secondary node establish a connection to each other by using broadcast information. However, when a plurality of secondary nodes establish connections to one primary node, all the plurality of secondary nodes send broadcast information, which increases a collision probability of the broadcast information of the plurality of secondary nodes, thereby prolonging broadcast time of the plurality of secondary nodes, increasing power consumption of the plurality of secondary nodes, prolonging time for establishing a connection between the primary node and the secondary node, and accordingly reducing efficiency in establishing the connection between the primary node and the secondary node.

### SUMMARY

This application provides an access method and a communication apparatus. The access method can reduce power consumption of a first device or a second device, shorten duration for subsequently establishing a connection between the first device and the second device, and improve efficiency in establishing the connection between the first device and the second device.

According to a first aspect, an access method is provided. The access method includes: sending first broadcast information based on a target access mode, where the first broadcast information indicates that a broadcast type is connectable; and if a first access request from a first device is received within first preset duration, sending first response information for the first access request, where the target access mode is an access mode in an access mode set, and the access mode set includes at least two access modes.

For example, the first preset duration may be predefined or preset in a communication system, and the communication system may be, for example, a general transmission low energy (general transmission low energy, GT-LE) system or another possible short-range communication system. Alternatively, the first preset duration may be an empirical value obtained through testing. Alternatively, the first preset duration may be set by using a corresponding configuration (for example, a profile). Alternatively, the first preset duration is indicated by the second device to the first device.

For example, the access mode set includes a first access mode and a second access mode.

In the first access mode, a primary node sends broadcast information, so that after a secondary node obtains, through scanning, (or receives) the broadcast information of the primary node, the secondary node serves as a requesting party (in this case, the primary node serves as a requested party) to request to establish a connection to the primary node. In addition, the primary node configures a corresponding resource for the connection, so that the primary node and the secondary node establish the corresponding connection.

In the second access mode, a secondary node sends broadcast information, so that after a primary node obtains, through scanning, (or receives) the broadcast information of the secondary node, the primary node serves as a requesting party (in this case, the secondary node serves as a requested party) to request to establish a connection to the secondary node, and configures a corresponding resource, so that the primary node and the secondary node establish the corresponding connection.

The first broadcast information is sent based on an access mode in the access mode set, and after the first access request from the first device is received, the first response information for the first access request is sent, thereby implementing access between the second device and the first device. This can reduce power consumption of the first device or the second device, shorten duration for subsequently establishing a connection between the first device and the second device, and improve efficiency in establishing the connection between the first device and the second device.

With reference to the first aspect, in some implementations of the first aspect, the at least two access modes correspond to different scenarios.

Different access modes correspond to different scenarios, which means that an access mode is related to a scenario. A corresponding access mode that is more applicable to the current second device is used, to implement access to/by the first device, thereby reducing power consumption of the first device or the second device, shortening duration for subsequently establishing a connection between the first device and the second device, and improving efficiency in establishing the connection between the first device and the second device.

With reference to the first aspect, in some implementations of the first aspect, the target access mode is a first access mode in the access mode set, and the first response information includes parameter information used for connection establishment.

In this case, the first device is a secondary node, and the second device is a primary node.

The first response information carries the parameter information used for connection establishment, so that the first device obtains the parameter information configured by the second device for connection establishment between the first device and the second device.

With reference to the first aspect, in some implementations of the first aspect, the target access mode is the first access mode in the access mode set, and the first access request includes at least one of the following: identification information of the first device, identification information of a second device to be accessed by the first device, or capability information of the first device.

In this embodiment of this application, the second device to be accessed by the first device may be understood as follows: The first device may serve as an accessing device, to request to access the second device. The first access request carries the identification information of the first device, so that the second device knows that the first access request is sent by the first device. The first access request carries the identification information of the second device to be accessed by the first device, so that the second device determines whether the first device is capable of accessing the second device. The first access request carries the capability information of the first device, so that the second device knows the capability of the first device, and configures proper parameter information for subsequent connection establishment between the first device and the second device.

With reference to the first aspect, in some implementations of the first aspect, the first preset duration is first duration, the target access mode is the first access mode in the access mode set, and the access method further includes: if the first access request is not received within the first duration, scanning broadcast information based on a second access mode in the access mode set; if second broadcast information from the first device is obtained through scanning, sending a second access request, where the second broadcast information indicates that a broadcast type is connectable; and receiving second response information that is for the second access request and that is from the first device.

In this case, the first device is a secondary node, and the second device is a primary node.

If the first access request is not received within the first duration, the target access mode needs to be switched to the second access mode in the access mode set, that is, broadcast information is scanned. If the second broadcast information from the first device is obtained through scanning, the second access request is sent, and the second response information that is for the second access request and that is from the first device is received, to implement access to/by the first device, thereby reducing power consumption of the second device, shortening duration for subsequently establishing a connection between the first device and the second device, and improving efficiency in establishing the connection between the first device and the second device.

With reference to the first aspect, in some implementations of the first aspect, the second access request includes parameter information used for connection establishment.

The second access request carries the parameter information used for connection establishment, so that the first device obtains the parameter information configured by the second device for connection establishment between the first device and the second device.

With reference to the first aspect, in some implementations of the first aspect, the second response information includes at least one of the following: the identification information of the first device, the identification information of the second device that is to access the first device, or the capability information of the first device.

In this embodiment of this application, the second device that is to access the first device may be understood as follows: The first device may serve as a to-be-accessed device, waiting for the second device to request to perform access. The second response information carries the identification information of the first device, so that the second device knows that the second response information is sent by the first device. The second response information carries the identification information of the second device that is to access the first device, so that the second device determines whether the second device is capable of accessing the first device, or the second device determines whether the second response information is response information for the second access request. The second response information carries the capability information of the first device, so that the second device knows the capability of the first device.

With reference to the first aspect, in some implementations of the first aspect, the access method further includes: sending first information on a target time-frequency resource, where the first information includes control information and/or data information, and the parameter information includes information indicating the target time-frequency resource.

The target time-frequency resource may be a time domain resource and/or a frequency domain resource.

The first information is sent based on the target time-frequency resource indicated in the parameter information, so that the first device may quickly obtain the first information.

With reference to the first aspect, in some implementations of the first aspect, the target access mode is a second access mode in the access mode set, and the first access request includes parameter information used for connection establishment.

In this case, the first device is a primary node, and the second device is a secondary node.

The first access request carries the parameter information used for connection establishment, so that the second device obtains the parameter information configured by the first device for connection establishment between the first device and the second device.

With reference to the first aspect, in some implementations of the first aspect, the target access mode is the second access mode in the access mode set, and the first response information includes at least one of the following: identification information of a second device to be accessed by the first device, identification information of the first device, capability information of the second device, or answer information indicating whether to accept the first access request.

The first response information carries the identification information of the first device and/or the identification information of the second device to be accessed by the first device, so that the first device determines whether the first device is capable of accessing the second device, or the first device determines whether the first response information is response information for the first access request. This avoids a conflict problem that a plurality of second devices establish connections to one first device simultaneously, improves efficiency in establishing the connection, and shortens duration for establishing the connection.

The first response information carries the capability information of the second device, so that the first device knows the capability of the second device.

With reference to the first aspect, in some implementations of the first aspect, the first preset duration is second duration, the target access mode is the second access mode in the access mode set, and the access method further includes: if the first access request is not received within the second duration, scanning broadcast information based on a first access mode in the access mode set; if second broadcast information from the first device is obtained through scanning, sending a second access request, where the second broadcast information indicates that a broadcast type is connectable; and receiving second response information that is for the second access request and that is from the first device.

In this case, the first device is a primary node, and the second device is a secondary node.

If the first access request is not received within the second duration, the target access mode needs to be switched to the first access mode in the access mode set, that is, broadcast information is scanned. If the second broadcast information from the first device is obtained through scanning, the second access request is sent, and the second response information that is for the second access request and that is from the first device is received, to implement access to/by the first device, thereby reducing power consumption of the second device, shortening duration for subsequently establishing a connection between the first device and the second device, and improving efficiency in establishing the connection between the first device and the second device.

With reference to the first aspect, in some implementations of the first aspect, the second response information includes parameter information used for connection establishment.

The second response information carries the parameter information used for connection establishment, so that the second device obtains the parameter information configured by the first device for connection establishment between the first device and the second device.

With reference to the first aspect, in some implementations of the first aspect, the second access request includes at least one of the following: the identification information of the second device that is to access the first device, the identification information of the first device, or the capability information of the second device.

The second access request carries the identification information of the first device and/or the identification information of the second device, so that the first device determines whether the second device accesses the first device. This avoids a conflict problem that a plurality of second devices establish connections to one first device simultaneously, improves efficiency in establishing the connection, and shortens duration for establishing the connection.

The second access request carries the capability information of the second device, so that the first device knows the capability of the second device.

With reference to the first aspect, in some implementations of the first aspect, the access method further includes: receiving first information on a target time-frequency resource based on the parameter information, where the first information includes control information and/or data information, and the parameter information includes information indicating the target time-frequency resource.

The first information may be quickly received based on the target time-frequency resource indicated in the parameter information.

With reference to the first aspect, in some implementations of the first aspect, the parameter information includes at least one of the following: a sending period of the first information, sending time information of the first information, sending frequency information of the first information, where the frequency information indicates a sending frequency of the first information and/or a frequency hopping interval of the first information, or identification information of the first information.

With reference to the first aspect, in some implementations of the first aspect, the parameter information further includes at least one of the following: time-frequency information used for connection establishment between the second device and the first device, identification information used for connection establishment between the second device and the first device, connection timeout information, where the connection timeout information indicates connection timeout time, a modulation scheme supported by the first device, a modulation scheme supported by the second device, a channel bandwidth supported by the first device, a channel bandwidth supported by the second device, a channel bandwidth used for communication between the second device and the first device, or a modulation and coding scheme used for communication between the second device and the first device.

The time-frequency information used for connection establishment between the second device and the first device may include time-frequency information of subsequent connection establishment between the second device and the first device and/or time-frequency information of allocation for a connection between the second device and the second the first device.

The time-frequency information of subsequent connection establishment between the second device and the first device indicates a time-frequency resource carrying interaction information of the second device and the first device when the second device and the first device establish a connection to each other.

The time-frequency information of allocation for a connection between the second device and the first device indicates a time-frequency resource allocated when the second device and the first device negotiate a connection. That is, the first device and the second device negotiate, on the time-frequency resource, a specific time-frequency resource carrying interaction information of the second device and the first device when the second device and the first device establish a connection to each other.

For example, the time-frequency information indicates a time domain resource and/or a frequency domain resource for connection establishment between the second device and the first device.

With reference to the first aspect, in some implementations of the first aspect, the first broadcast information indicates at least one of the following: attribute information of the second device, identification information of a device capable of requesting access, where the device capable of requesting access is a device capable of requesting to establish a connection to the second device, or the capability information of the second device.

Attribute information indicates an attribute of a device sending the attribute information, that is, whether the device sending the attribute information is a primary node or a secondary node.

The attribute information of the second device is indicated by using the first broadcast information, so that the first device knows the attribute of the second device.

The identification information of the device capable of requesting access is indicated by using the first broadcast information, so that the first device knows whether the first device is capable of requesting to access the second device.

The capability information of the second device is indicated by using the first broadcast information, so that the first device knows the capability of the second device.

With reference to the first aspect, in some implementations of the first aspect, the second broadcast information indicates at least one of the following: attribute information of the first device, identification information of a device capable of requesting access, where the device capable of requesting access is a device capable of requesting to establish a connection to the first device, or the capability information of the first device.

The attribute information of the first device is indicated by using the second broadcast information, so that the second device knows the attribute of the first device.

The identification information of the device capable of requesting access is indicated by using the second broadcast information, so that the second device knows whether the second device is capable of requesting to access the first device.

The capability information of the first device is indicated by using the second broadcast information, so that the second device knows the capability of the first device.

With reference to the first aspect, in some implementations of the first aspect, the capability information of the first device includes at least one of the following: a modulation scheme supported by the first device, a channel bandwidth supported by the first device, whether the first device supports channel coding, or a channel coding type supported by the first device.

With reference to the first aspect, in some implementations of the first aspect, the capability information of the second device includes at least one of the following: a modulation scheme supported by the second device, a channel bandwidth supported by the second device, whether the second device supports channel coding, or a channel coding type supported by the second device.

With reference to the first aspect, in some implementations of the first aspect, the access method further includes: establishing a connection between the first device and the second device.

According to a second aspect, an access method is provided. The access method includes: scanning broadcast information based on a target access mode; if first broadcast information from a second device is received within second preset duration, sending first access request, where the first broadcast information indicates that a broadcast type is connectable; and receiving first response information that is for the first access request and that is from the second device, where the target access mode is an access mode in an access mode set, and the access mode set includes at least two access modes.

For example, the second preset duration may be predefined or preset in a communication system, and the communication system may be, for example, a GT-LE system or another possible short-range communication system. Alternatively, the second preset duration may be an empirical value obtained through testing. Alternatively, the second preset duration may be set by using a corresponding configuration (for example, a profile). Alternatively, the second preset duration is indicated by the second device to the first device.

In an access mode in the access mode set, if the first broadcast information from the second device is received, the first access request is sent, and the first response information that is for the first access request and that is from the second device is received, thereby implementing access between the second device and the first device. This can reduce power consumption of the first device or the second device, shorten duration for subsequently establishing a connection between the first device and the second device, and improve efficiency in establishing the connection between the first device and the second device.

With reference to the second aspect, in some implementations of the second aspect, the at least two access modes correspond to different scenarios.

With reference to the second aspect, in some implementations of the second aspect, the target access mode is a first access mode in the access mode set, and the first response information includes parameter information used for connection establishment.

With reference to the second aspect, in some implementations of the second aspect, the target access mode is the first access mode in the access mode set, and the first access request includes at least one of the following: identification information of a first device that is to access the second device, identification information of the second device, or capability information of the first device.

In this embodiment of this application, the first device that is to access the second device may be understood as follows: The second device may serve as a to-be-accessed device, waiting for the first device to request to perform access.

With reference to the second aspect, in some implementations of the second aspect, the second preset duration is third duration, the target access mode is the first access mode in the access mode set, and the access method further includes: if the first broadcast information is not received within the third duration, sending second broadcast information based on a second access mode in the access mode set, where the second broadcast information indicates that a broadcast type is connectable; and receiving a second access request from the second device, and sending second response information for the second access request.

If the first broadcast information is not received within the third duration, the target access mode needs to be switched to the second access mode in the access mode set, that is, the second broadcast information is sent. Then the second access request from the second device is received, and the second response information for the second access request is sent, to implement access to/by the first device, thereby reducing power consumption of the first device, shortening duration for subsequently establishing a connection between the first device and the second device, and improving efficiency in establishing the connection between the first device and the second device.

With reference to the second aspect, in some implementations of the second aspect, the second access request includes parameter information used for connection establishment.

With reference to the second aspect, in some implementations of the second aspect, the second response information includes at least one of the following: the identification information of the first device to be accessed by the second device, the identification information of the second device, or the capability information of the first device.

In this embodiment of this application, the first device to be accessed by the second device may be understood as follows: The second device may serve as an accessing device, to request to access the first device.

With reference to the second aspect, in some implementations of the second aspect, the access method further includes: receiving first information on a target time-frequency resource based on the parameter information, where the first information includes control information and/or data information, and the parameter information includes information indicating the target time-frequency resource.

With reference to the second aspect, in some implementations of the second aspect, the target access mode is a second access mode in the access mode set, and the first access request includes parameter information used for connection establishment.

With reference to the second aspect, in some implementations of the second aspect, the target access mode is the second access mode in the access mode set, and the first response information includes at least one of the following: identification information of the second device, identification information of a first device that is to access the second device, capability information of the second device, or answer information indicating whether to accept the first access request.

With reference to the second aspect, in some implementations of the second aspect, the second preset duration is fourth duration, the target access mode is the second access mode in the access mode set, and the access method further includes: if the first broadcast information is not received within the fourth duration, sending second broadcast information based on a first access mode in the access mode set, where the second broadcast information indicates that a broadcast type is connectable; and receiving a second access request from the second device, and sending second response information for the second access request.

If the first broadcast information is not received within the fourth duration, the target access mode needs to be switched to the first access mode in the access mode set, that is, the second broadcast information is sent. Then the second access request from the second device is received, and the second response information for the second access request is sent, to implement access to/by the first device, thereby reducing power consumption of the first device, shortening duration for subsequently establishing a connection between the first device and the second device, and improving efficiency in establishing the connection between the first device and the second device.

With reference to the second aspect, in some implementations of the second aspect, the second response information includes parameter information used for connection establishment.

With reference to the second aspect, in some implementations of the second aspect, the second access request includes at least one of the following: the identification information of the second device, the identification information of the first device to be accessed by the second device, or the capability information of the second device.

With reference to the second aspect, in some implementations of the second aspect, the access method further includes: sending first information on a target time-frequency resource, where the first information includes control information and/or data information, and the parameter information includes information indicating the target time-frequency resource.

With reference to the second aspect, in some implementations of the second aspect, the parameter information includes at least one of the following: a sending period of the first information, sending time information of the first information, sending frequency information of the first information, where the frequency information indicates a sending frequency of the first information and/or a frequency hopping interval of the first information, or identification information of the first information.

With reference to the second aspect, in some implementations of the second aspect, the parameter information further includes at least one of the following: time-frequency information used for connection establishment between the second device and the first device, identification information used for connection establishment between the second device and the first device, connection timeout information, where the connection timeout information indicates connection timeout time, a modulation scheme supported by the first device, a modulation scheme supported by the second device, a channel bandwidth supported by the first device, a channel bandwidth supported by the second device, a channel bandwidth used for communication between the second device and the first device, or a modulation and coding scheme used for communication between the second device and the first device.

With reference to the second aspect, in some implementations of the second aspect, the first broadcast information indicates at least one of the following: attribute information of the second device, identification information of a device capable of requesting access, where the device capable of requesting access is a device capable of requesting to establish a connection to the second device, or the capability information of the second device.

With reference to the second aspect, in some implementations of the second aspect, the second broadcast information indicates at least one of the following: attribute information of the first device, identification information of a device capable of requesting access, where the device capable of requesting access is a device capable of requesting to establish a connection to the first device, or the capability information of the first device.

With reference to the second aspect, in some implementations of the second aspect, the capability information of the first device includes at least one of the following: a modulation scheme supported by the first device, a channel bandwidth supported by the first device, whether the first device supports channel coding, or a channel coding type supported by the first device.

With reference to the second aspect, in some implementations of the second aspect, the capability information of the second device includes at least one of the following: a modulation scheme supported by the second device, a channel bandwidth supported by the second device, whether the second device supports channel coding, or a channel coding type supported by the second device.

With reference to the second aspect, in some implementations of the second aspect, the access method further includes: establishing a connection between the first device and the second device.

According to a third aspect, a communication apparatus is provided. The communication apparatus includes: a communication unit, configured to send first broadcast information based on a target access mode, where the first broadcast information indicates that a broadcast type is connectable. The communication unit is further configured to: if a first access request from a first device is received within first preset duration, send first response information for the first access request, where the target access mode is an access mode in an access mode set, and the access mode set includes at least two access modes.

With reference to the third aspect, in some implementations of the third aspect, the at least two access modes correspond to different scenarios.

With reference to the third aspect, in some implementations of the third aspect, the target access mode is a first access mode in the access mode set, and the first response information includes parameter information used for connection establishment.

With reference to the third aspect, in some implementations of the third aspect, the target access mode is the first access mode in the access mode set, and the first access request includes at least one of the following: identification information of the first device, identification information of the communication apparatus to be accessed by the first device, or capability information of the first device.

With reference to the third aspect, in some implementations of the third aspect, the first preset duration is first duration, and the target access mode is the first access mode in the access mode set. The communication unit is further configured to: if the first access request is not received within the first duration, scan broadcast information based on a second access mode in the access mode set; if second broadcast information from the first device is obtained through scanning, send a second access request, where the second broadcast information indicates that a broadcast type is connectable; and receive second response information that is for the second access request and that is from the first device.

With reference to the third aspect, in some implementations of the third aspect, the second access request includes parameter information used for connection establishment.

With reference to the third aspect, in some implementations of the third aspect, the second response information includes at least one of the following: the identification information of the first device, the identification information of the communication apparatus that is to access the first device, or the capability information of the first device.

With reference to the third aspect, in some implementations of the third aspect, the communication unit is further configured to send first information on a target time-frequency resource, where the first information includes control information and/or data information, and the parameter information includes information indicating the target time-frequency resource.

With reference to the third aspect, in some implementations of the third aspect, the target access mode is a second access mode in the access mode set, and the first access request includes parameter information used for connection establishment.

With reference to the third aspect, in some implementations of the third aspect, the target access mode is the second access mode in the access mode set, and the first response information includes at least one of the following: identification information of the communication apparatus to be accessed by the first device, identification information of the first device, capability information of the communication apparatus, or answer information indicating whether to accept the first access request.

With reference to the third aspect, in some implementations of the third aspect, the first preset duration is second duration, and the target access mode is the second access mode in the access mode set. The communication unit is further configured to: if the first access request is not received within the second duration, scan broadcast information based on a first access mode in the access mode set; if second broadcast information from the first device is obtained through scanning, send a second access request, where the second broadcast information indicates that a broadcast type is connectable; and receive second response information that is for the second access request and that is from the first device.

With reference to the third aspect, in some implementations of the third aspect, the second response information includes parameter information used for connection establishment.

With reference to the third aspect, in some implementations of the third aspect, the second access request includes at least one of the following: the identification information of the communication apparatus that is to access the first device, the identification information of the first device, or the capability information of the communication apparatus.

With reference to the third aspect, in some implementations of the third aspect, the communication unit is further configured to receive first information on a target time-frequency resource based on the parameter information, where the first information includes control information and/or data information, and the parameter information includes information indicating the target time-frequency resource.

With reference to the third aspect, in some implementations of the third aspect, the parameter information includes at least one of the following: a sending period of the first information, sending time information of the first information, sending frequency information of the first information, where the frequency information indicates a sending frequency of the first information and/or a frequency hopping interval of the first information, or identification information of the first information.

With reference to the third aspect, in some implementations of the third aspect, the parameter information further includes at least one of the following: time-frequency information used for connection establishment between the communication apparatus and the first device, identification information used for connection establishment between the communication apparatus and the first device, connection timeout information, where the connection timeout information indicates connection timeout time, a modulation scheme supported by the first device, a modulation scheme supported by the communication apparatus, a channel bandwidth supported by the first device, a channel bandwidth supported by the communication apparatus, a channel bandwidth used for communication between the communication apparatus and the first device, or a modulation and coding scheme used for communication between the communication apparatus and the first device.

With reference to the third aspect, in some implementations of the third aspect, the first broadcast information indicates at least one of the following: attribute information of the communication apparatus, identification information of a device capable of requesting access, where the device capable of requesting access is a device capable of requesting to establish a connection to the communication apparatus, or the capability information of the communication apparatus.

With reference to the third aspect, in some implementations of the third aspect, the second broadcast information indicates at least one of the following: attribute information of the first device, identification information of a device capable of requesting access, where the device capable of requesting access is a device capable of requesting to establish a connection to the first device, or the capability information of the first device.

With reference to the third aspect, in some implementations of the third aspect, the capability information of the first device includes at least one of the following: a modulation scheme supported by the first device, a channel bandwidth supported by the first device, whether the first device supports channel coding, or a channel coding type supported by the first device.

With reference to the third aspect, in some implementations of the third aspect, the capability information of the communication apparatus includes at least one of the following: a modulation scheme supported by the communication apparatus, a channel bandwidth supported by the communication apparatus, whether the communication apparatus supports channel coding, or a channel coding type supported by the communication apparatus.

With reference to the third aspect, in some implementations of the third aspect, the communication apparatus further includes: a processing unit, configured to establish a connection between the first device and the communication apparatus.

According to a fourth aspect, a communication apparatus is provided. The communication apparatus includes: a communication unit, configured to scan broadcast information based on a target access mode, and if first broadcast information from a second device is received within second preset duration, send first access request, where the first broadcast information indicates that a broadcast type is connectable. The communication unit is further configured to receive first response information that is for the first access request and that is from the second device, where the target access mode is an access mode in an access mode set, and the access mode set includes at least two access modes.

With reference to the fourth aspect, in some implementations of the fourth aspect, the at least two access modes correspond to different scenarios.

With reference to the fourth aspect, in some implementations of the fourth aspect, the target access mode is a first access mode in the access mode set, and the first response information includes parameter information used for connection establishment.

With reference to the fourth aspect, in some implementations of the fourth aspect, the target access mode is the first access mode in the access mode set, and the first access request includes at least one of the following: identification information of the communication apparatus that is to access the second device, identification information of the second device, or capability information of the communication apparatus.

With reference to the fourth aspect, in some implementations of the fourth aspect, the second preset duration is third duration, and the target access mode is the first access mode in the access mode set. The communication unit is further configured to: if the first broadcast information is not received within the third duration, send second broadcast information based on a second access mode in the access mode set, where the second broadcast information indicates that a broadcast type is connectable; and receive a second access request from the second device, and send second response information for the second access request.

With reference to the fourth aspect, in some implementations of the fourth aspect, the second access request includes parameter information used for connection establishment.

With reference to the fourth aspect, in some implementations of the fourth aspect, the second response information includes at least one of the following: the identification information of the communication apparatus to be accessed by the second device, the identification information of the second device, or the capability information of the communication apparatus.

With reference to the fourth aspect, in some implementations of the fourth aspect, the communication unit is further configured to receive first information on a target time-frequency resource based on the parameter information, where the first information includes control information and/or data information, and the parameter information includes information indicating the target time-frequency resource.

With reference to the fourth aspect, in some implementations of the fourth aspect, the target access mode is a second access mode in the access mode set, and the first access request includes parameter information used for connection establishment.

With reference to the fourth aspect, in some implementations of the fourth aspect, the target access mode is the second access mode in the access mode set, and the first response information includes at least one of the following: identification information of the second device, identification information of the communication apparatus that is to access the second device, capability information of the second device, or answer information indicating whether to accept the first access request.

With reference to the fourth aspect, in some implementations of the fourth aspect, the second preset duration is fourth duration, and the target access mode is the second access mode in the access mode set. The communication unit is further configured to: if the first broadcast information is not received within the fourth duration, send second broadcast information based on a first access mode in the access mode set, where the second broadcast information indicates that a broadcast type is connectable; and receive a second access request from the second device, and send second response information for the second access request.

With reference to the fourth aspect, in some implementations of the fourth aspect, the second response information includes parameter information used for connection establishment.

With reference to the fourth aspect, in some implementations of the fourth aspect, the second access request includes at least one of the following: the identification information of the second device, the identification information of the communication apparatus to be accessed by the second device, or the capability information of the second device.

With reference to the fourth aspect, in some implementations of the fourth aspect, the communication unit is further configured to send first information on a target time-frequency resource, where the first information includes control information and/or data information, and the parameter information includes information indicating the target time-frequency resource.

With reference to the fourth aspect, in some implementations of the fourth aspect, the parameter information includes at least one of the following: a sending period of the first information, sending time information of the first information, sending frequency information of the first information, where the frequency information indicates a sending frequency of the first information and/or a frequency hopping interval of the first information, or identification information of the first information.

With reference to the fourth aspect, in some implementations of the fourth aspect, the parameter information further includes at least one of the following: time-frequency information used for connection establishment between the second device and the communication apparatus, identification information used for connection establishment between the second device and the communication apparatus, connection timeout information, where the connection timeout information indicates connection timeout time, a modulation scheme supported by the communication apparatus, a modulation scheme supported by the second device, a channel bandwidth supported by the communication apparatus, a channel bandwidth supported by the second device, a channel bandwidth used for communication between the second device and the communication apparatus, or a modulation and coding scheme used for communication between the second device and the communication apparatus.

With reference to the fourth aspect, in some implementations of the fourth aspect, the first broadcast information indicates at least one of the following: attribute information of the second device, identification information of a device capable of requesting access, where the device capable of requesting access is a device capable of requesting to establish a connection to the second device, or the capability information of the second device.

With reference to the fourth aspect, in some implementations of the fourth aspect, the second broadcast information indicates at least one of the following: attribute information of the communication apparatus, identification information of a device capable of requesting access, where the device capable of requesting access is a device capable of requesting to establish a connection to the communication apparatus, or the capability information of the communication apparatus.

With reference to the fourth aspect, in some implementations of the fourth aspect, the capability information of the communication apparatus includes at least one of the following: a modulation scheme supported by the communication apparatus, a channel bandwidth supported by the communication apparatus, whether the communication apparatus supports channel coding, or a channel coding type supported by the communication apparatus.

With reference to the fourth aspect, in some implementations of the fourth aspect, the capability information of the second device includes at least one of the following: a modulation scheme supported by the second device, a channel bandwidth supported by the second device, whether the second device supports channel coding, or a channel coding type supported by the second device.

With reference to the fourth aspect, in some implementations of the fourth aspect, the communication apparatus further includes: a processing unit, configured to establish a connection between the communication apparatus and the second device.

According to a fifth aspect, a communication apparatus is provided, including at least one memory and at least one processor. The at least one memory is configured to store a program, and the at least one processor is configured to run the program, to implement the access method according to any one of the first aspect or some implementations of the first aspect, or implement the access method according to any one of the second aspect or some implementations of the second aspect.

According to a sixth aspect, a computer-readable storage medium is provided. The computer-readable storage medium stores a program or instructions. When the program or the instructions are executed, a computer is enabled to perform the access method according to any one of the first aspect or some implementations of the first aspect, or when the program or the instructions are executed, a computer is enabled to perform the access method according to any one of the second aspect or some implementations of the second aspect.

According to a seventh aspect, a chip is provided, including at least one processor and an interface circuit. The interface circuit is configured to provide program instructions or data for the at least one processor, and the at least one processor is configured to execute the program instructions, to implement the access method according to any one of the first aspect or some implementations of the first aspect, or implement the access method according to any one of the second aspect or some implementations of the second aspect.

Optionally, in an implementation, the chip may further include a memory, the memory stores a program, and the processor is configured to execute the program stored in the memory. When the program is executed, the processor is configured to perform the access method according to any one of the first aspect or some implementations of the first aspect, or the processor is configured to perform the access method according to any one of the second aspect or some implementations of the second aspect.

According to an eighth aspect, a computer program product is provided. The computer program product includes a computer program. When the computer program product is executed by a computer, the computer performs the access method according to any one of the first aspect or some implementations of the first aspect, or the computer performs the access method according to any one of the second aspect or some implementations of the second aspect.

According to a ninth aspect, a communication system is provided, including the apparatus provided in the third aspect or any one of the implementations of the third aspect and the communication apparatus provided in the fourth aspect or any one of the implementations of the fourth aspect.

According to a tenth aspect, a terminal is provided. The terminal includes an apparatus configured to perform the access method according to any one of the first aspect, the second aspect, some implementations of the first aspect, or some implementations of the second aspect, or includes the communication apparatus provided in the third aspect or any one of the implementations of the third aspect, or includes the communication apparatus provided in the fourth aspect or any one of the implementations of the fourth aspect, or includes the communication apparatus provided in the fifth aspect.

Further, the terminal may be an intelligent transportation device (a vehicle or an unmanned aerial vehicle), a smart home device, an intelligent manufacturing device, an intelligent wearable device, a robot, or the like. The intelligent transportation device may be, for example, an automated guided vehicle (automated guided vehicle, AGV) or an unmanned transportation vehicle.

### BRIEF DESCRIPTION OF DRAWINGS

FIG. 1 shows an example of a communication system applicable to embodiments of this application;
FIG. 2 is a schematic flowchart of an example of an access method according to an embodiment of this application;
FIG. 3 is a schematic flowchart of an example of another access method according to an embodiment of this application;
FIG. 4 is a schematic flowchart of an example of still another access method according to an embodiment of this application;
FIG. 5 is a schematic flowchart of an example of yet another access method according to an embodiment of this application;
FIG. 6 is a schematic flowchart of an example of a method for discovering each other by a first device and a second device according to an embodiment of this application;
FIG. 7 is a schematic diagram of a structure of a communication apparatus according to an embodiment of this application; and
FIG. 8 is a schematic diagram of a structure of another communication apparatus according to an embodiment of this application.

### DESCRIPTION OF EMBODIMENTS

Technical solutions of this application are described below with reference to accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between the associated objects.

The terms "include", "comprise", "have", and their variants all mean "include but are not limited to", unless otherwise specifically emphasized in another manner.

In embodiments of this application, "indicate" may include "directly indicate" and "indirectly indicate", or may include "explicitly indicate" and "implicitly indicate". Information to be indicated by specific information (for example, information indicating a target time-frequency resource described below) is referred to as to-be-indicated information. In a specific implementation process, the to-be-indicated information may be indicated in a plurality of manners, for example, but not limited to, a manner of directly indicating the to-be-indicated information. For example, the to-be-indicated information is indicated by using the to-be-indicated information itself, an index of the to-be-indicated information, or the like. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed. For example, specific information may alternatively be indicated by using a pre-agreed (for example, protocol-specified) arrangement sequence of pieces of information, to reduce indication overheads to some extent.

In embodiments of this application, "first", "second", and various numerical numbers are merely used for distinguishing for ease of description, and are not intended to limit the scope of embodiments of this application. For example, they are used to differentiate between different indication information.

In embodiments of this application, duration may be understood as a time resource window, that is, a time domain resource and/or a frequency domain resource.

In embodiments of this application, a device that sends an access request may be referred to as an accessing device, and a device that receives an access request may be referred to as a to-be-accessed device. For example, in Case 11 and Case 21 described below, a first device is an accessing device, and a second device is a to-be-accessed device. For another example, in Case 12 and Case 22 described below, a first device is a to-be-accessed device, and a second device is an accessing device.

In order to help understand embodiments of this application, a communication system applicable to the method provided in embodiments of this application is first described.

It should be understood that the communication system includes a plurality of nodes. The node may be an electronic device that has a data receiving and sending processing capability, and may include a terminal device, or may be a chip included in a terminal device. For example, the node may be a cockpit (cockpit domain) device, or a module in a cockpit device, for example, one or more of modules such as a cockpit domain controller (cockpit domain controller, CDC), a camera, a screen, a microphone, a speaker, an electronic key, and a passive entry passive start system controller. In a specific embodiment, the node may be a data relay device, for example, a network device, a router, a repeater, a bridge, or a switch, or may be a terminal device. A communication technology in this application may be a communication technology between terminal devices, or may be a communication technology between a network device and a terminal device, or may be a communication technology between network devices. Identities of two communication parties are not specifically limited, provided that a corresponding communication technology and function can be supported. The terminal device may be user equipment (user equipment, UE), a mobile phone (mobile phone), a tablet computer (pad), a desktop computer, an earphone, a speaker, and the like; and may include a machine intelligent device, for example, a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a remote medical (remote medical) device, a smart grid (smart grid) device, a smart city (smart city) device, a smart home device, or the like; and may further include a wearable device (for example, a smart watch, a smart band, or a pedometer), or the like. In some technical scenarios, a device having a similar data receiving and sending capability may not be referred to as a node.

It should be understood that the network device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (a TRP or a TP) in a 5G system like an NR system, one or a group (including a plurality of antenna panels) of antenna panels of a base station in a 5G system, or may be a network node that forms a gNB or a transmission point, for example, a baseband unit (BBU) or a distributed unit (distributed unit, DU).

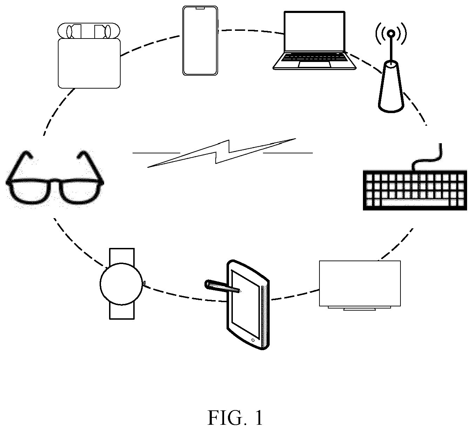

FIG. 1 shows an example of a communication system applicable to embodiments of this application. For example, in the system shown in FIG. 1, a node includes but is not limited to a base station, a notebook computer, a mobile phone, earphones, glasses, a watch, a pad, a stylus, a television (television, TV), or a keyboard.

In some communication systems, some nodes may be referred to as management nodes/main control nodes/grant nodes (grant node, G node), and some nodes may be referred to as terminal nodes (terminal node, T node). For example, the communication system may be a GT-LE system, the G node may be referred to as a primary node (or a primary device), and the T node may be referred to as a secondary node (or a secondary device). The primary node and the secondary node may be two types of nodes distinguished in terms of logical functions. The primary node manages the secondary node, has a function of allocating communication domain resources, and is responsible for allocating resources to the secondary node. The secondary node follows scheduling of the primary node, and communicates with the primary node by using the resources allocated by the primary node. For example, the foregoing network device may be a primary node, and the foregoing terminal device may be a secondary node. For another example, the foregoing terminal device may be a primary node, and another terminal device may be a secondary node. Alternatively, the communication system may be another possible communication system. A type of the communication system is not specifically limited in this application. The solutions of this application may be applied to existing communication systems or communication systems that may appear in the future.

One node (apparatus or device) may be in one or more communication systems. For example, when a mobile phone performs wireless communication with an earphone, the mobile phone and the earphone form a first communication system. In the first communication system, the mobile phone is a primary node, the earphone is a secondary node, and the earphone follows scheduling of the mobile phone. Further, after the mobile phone detects a CDC and establishes a wireless connection to the CDC, the mobile phone and the CDC form a second communication system. In the second communication system, the CDC is a primary node, the mobile phone is a secondary node, and the mobile phone follows scheduling of the CDC. Optionally, the second communication system may further include another secondary node, for example, an in-vehicle sound box or a microphone.

Currently, a primary node and a secondary node establish a connection to each other by using broadcast information or the like. However, when a plurality of secondary nodes establish connections to one primary node, all the plurality of secondary nodes send broadcast information, which increases a collision probability of the broadcast information of the plurality of secondary nodes, thereby prolonging broadcast time of the plurality of secondary nodes, increasing power consumption of the plurality of secondary nodes, prolonging time for establishing a connection between the primary node and the secondary node, and accordingly reducing efficiency in establishing the connection between the primary node and the secondary node.

Therefore, an embodiment of this application provides an access method. In the access method, access between a first device and a second device may be implemented in a target access mode, thereby reducing power consumption of the first device or the second device, shortening duration for subsequently establishing a connection between the first device and the second device, and improving efficiency in establishing the connection between the first device and the second device.

One of the first device and the second device is a primary node, and the other device is a secondary node.

The target access mode is an access mode in an access mode set, and the access mode set includes at least two access modes.

In an implementation, the target access mode may be configured by an operation, administration, and maintenance (operation, administration, and maintenance, OAM) entity.

In another implementation, the target access mode may be configured by using a profile.

In still another implementation, the target access mode is a default access mode of the second device.

For example, a user may change the default access mode of the second device by performing a related setting.

Optionally, after the second device and the first device establish a connection to each other, the primary node in the second device and the first device may indicate, in subsequent broadcast information or dedicated information of the primary node, a system default access mode. In this way, when the second device and the first device re-establish a connection to each other, the default access mode is adjusted.

For example, different application scenarios may correspond to different access modes. To be specific, the at least two access modes included in the access mode set correspond to different scenarios. For example, for a battery management system (battery management system, BMS) scenario, the access mode may be a first access mode. For another example, for a short-range communication scenario formed by an earphone and another device, the access mode may be a second access mode.

For example, the access mode set includes a first access mode and a second access mode.

For the first access mode, the primary node is in a broadcasting state, and the secondary node is in a scanning state. Specifically, the primary node sends broadcast information, so that after the secondary node obtains, through scanning, (or receives) the broadcast information of the primary node, the secondary node serves as a requesting party (in this case, the primary node serves as a requested party) to request to establish a connection to the primary node. In addition, the primary node configures a corresponding resource for the connection, so that the primary node and the secondary node establish the corresponding connection.

For the second access mode, the primary node is in a scanning state, and the secondary node is in a broadcasting state. Specifically, the secondary node sends broadcast information, so that after the primary node obtains, through scanning, (or receives) the broadcast information of the secondary node, the primary node serves as a requesting party (in this case, the secondary node serves as a requested party) to request to establish a connection to the secondary node. In addition, the primary node configures a corresponding resource for the connection, so that the primary node and the secondary node establish the corresponding connection.

In the following method 300 to method 600, the broadcast information (for example, first broadcast information, second broadcast information, or broadcast information) indicates a broadcast type, and the broadcast type indicates whether a connection can be established.

If the broadcast type indicates that a connection can be established, a device (for example, the first device or the second device) receiving the broadcast information may establish, based on the broadcast information or extended broadcast information indicated by the broadcast information, a connection to a device (for example, the second device or the first device) sending the broadcast information. The device sending the broadcast information receives (or detects) a connection request in a first time resource window (for example, first preset duration) corresponding to (in a manner of the corresponding, the device sending the broadcast information explicitly indicates the first time resource window, or the device sending the broadcast information sends information about a resource occupied by the first time resource window, to implicitly indicate the first time resource window) the broadcast information or the extended broadcast information indicated by the broadcast information. The device (for example, the first device or the second device) that receives the broadcast information and expects to connect to the device (for example, the second device or the first device) sending the broadcast information may send a connection request in the first time resource window, to implement a communication connection between the two devices. Certainly, the two devices may establish a communication connection through one interaction, or may establish a communication connection through a plurality of interactions.

If the broadcast type indicates that no connection can be established, a device (for example, the first device or the second device) receiving the broadcast information cannot establish, based on the broadcast information or extended broadcast information indicated by the broadcast information, a connection to a device (for example, the second device or the first device) sending the broadcast information. The device (for example, the second device or the first device) sending the broadcast information does not receive a connection request in a first time resource window corresponding to the broadcast information or the extended broadcast information indicated by the broadcast information, or the first time resource window does not exist (that is, is undefined). The device (for example, the first device or the second device) receiving the broadcast information does not send, based on the broadcast information or the extended broadcast information indicated by the broadcast information, a connection request.

Because all nodes correspond to different target access modes, in a process of attempting to establish a connection between the primary node and the secondary node, a target access mode corresponding to the primary node may match a target access mode corresponding to the secondary node, or a target access mode corresponding to the primary node may not match a target access mode corresponding to the secondary node.

That the target access mode corresponding to the primary node matches the access mode corresponding to the secondary node includes: (Case A) the target access mode corresponding to the primary node is a first access mode in the access mode set, and the target access mode corresponding to the secondary node is the first access mode in the access mode set; and/or (Case B) the target access mode corresponding to the primary node is a second access mode in the access mode set, and the target access mode corresponding to the secondary node is the second access mode in the access mode set.

When the target access mode corresponding to the primary node matches the target access mode corresponding to the secondary node, the primary node and the secondary node may establish a connection to each other without switching the target access modes corresponding to the primary node and the secondary node.

That the target access mode corresponding to the primary node does not match the target access mode corresponding to the secondary node may include: (Case C) the target access mode corresponding to the primary node is a first access mode in the access mode set, and the target access mode corresponding to the secondary node is a second access mode in the access mode set; and/or (Case D) the target access mode corresponding to the primary node is a second access mode in the access mode set, and the target access mode corresponding to the secondary node is a first access mode in the access mode set.

When the target access mode corresponding to the primary node does not match the target access mode corresponding to the secondary node, one of the primary node and the secondary node needs to switch a corresponding target access mode, so that a target access mode corresponding to the primary node matches a target access mode corresponding to the secondary node, so as to establish a connection between the primary node and the secondary node.

Optionally, whether the node is specifically a primary node or a secondary node may be predefined by using a protocol or in another manner.

Case C may include Case C1 and Case C2.

Case C1: The primary node may switch the target access mode from the first access mode in the access mode set to the second access mode in the access mode set, and the primary node changes from a broadcasting state to a scanning state. In addition, the target access mode (the second access mode) corresponding to the secondary node is not switched, and the secondary node is in a broadcasting state.

Case C2: The secondary node may switch the target access mode from the second access mode in the access mode set to the first access mode in the access mode set, and the secondary node changes from a broadcasting state to a scanning state. In addition, the target access mode (the first access mode) corresponding to the primary node is not switched, and the primary node is in a broadcasting state.

Case D may include Case D1 and Case D2.

Case D1: The primary node may switch the target access mode from the second access mode in the access mode set to the first access mode in the access mode set, and the primary node changes from a scanning state to a broadcasting state. In addition, the target access mode (the first access mode) corresponding to the secondary node is not switched, and the primary node is in a scanning state.

Case D2: The secondary node may switch the target access mode from the first access mode in the access mode set to the second access mode in the access mode set, and the secondary node changes from a scanning state to a broadcasting state. In addition, the target access mode (the second access mode) corresponding to the primary node is not switched, and the primary node is in a scanning state.

A process of establishing a connection between the first device and the second device is described below in detail based on attributes of the first device and the second device (for example, the first device is a primary node or a secondary node, and the second device is a secondary node or a primary node), and access modes of the first device and the second device, and by using Case 11, Case 12, Case 13, Case 21, Case 22, and Case 23 as examples.

In Case 11 and Case 12, the second device is a primary node, and the first device is a secondary node. In Case 21 and Case 22, the second device is a secondary node, and the first device is a primary node.

In addition, in Case 11, both the second device and the first device establish a connection to each other by using a first access mode as the target access mode. In this case, the second device is in a broadcasting state, and the first device is in a scanning state. Case 11 corresponds to Case A described above.

In Case 12, the second device attempts to establish a connection to the first device based on a first access mode in the target access modes, and the first device attempts to establish a connection to the second device based on a second access mode in the target access modes. In this case, because both the second device and the first device are in a broadcasting state, one of the first device and the second device may switch a target access mode corresponding to the device, so as to establish a connection. For a specific process, refer to descriptions in the following Case 12. Case 12 corresponds to Case C described above.

In Case 13, the second device attempts to establish a connection to the first device based on a second access mode in the target access modes, and the first device attempts to establish a connection to the second device based on a first access mode in the target access modes. In this case, because both the second device and the first device are in a scanning state, one of the first device and the second device may switch a target access mode corresponding to the device, so as to establish a connection. For a specific process, refer to descriptions in the following Case 13. Case 13 corresponds to Case D described above.

In Case 21, both the second device and the first device establish a connection to each other by using a second access mode as the target access mode. In this case, the second device is in a broadcasting state, and the first device is in a scanning state. Case 21 corresponds to Case B described above.

In Case 22, the second device attempts to establish a connection to the first device based on a second access mode in the target access modes, and the first device attempts to establish a connection to the second device based on a first access mode in the target access modes. In this case, because both the second device and the first device are in a broadcasting state, one of the first device and the second device may switch a target access mode corresponding to the device, so as to establish a connection. Case 23 corresponds to Case C described above.

In Case 23, the second device attempts to establish a connection to the first device based on a first access mode in the target access modes, and the first device attempts to establish a connection to the second device based on a second access mode in the target access modes. In this case, because both the second device and the first device are in a scanning state, one of the first device and the second device may switch a target access mode corresponding to the device, so as to establish a connection. Case 22 corresponds to Case D described above.

In an example, in Case 11, both the second device and the first device establish a connection to each other by using a first access mode in the access mode set as the target access mode. In this case, the second device is a primary node, and the first device is a secondary node.

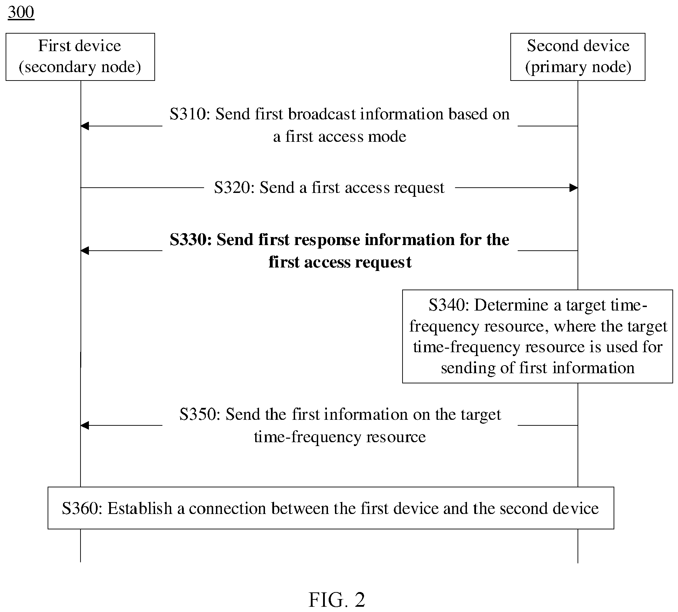

For example, FIG. 2 is a schematic flowchart of an example of an access method 300 according to an embodiment of this application. As shown in FIG. 2, the method 300 includes the following steps.

S310: A second device sends first broadcast information based on a first access mode (an example of a target access mode corresponding to the second device). The first broadcast information indicates a broadcast type, and the broadcast type indicates whether a connection can be established. "A connection can be established" means that the second device allows a device receiving the first broadcast information to perform access.

In some embodiments, the second device may periodically send the first broadcast information based on the first access mode.

In some embodiments, because a first device establishes a connection to another device based on the first access mode (an example of a target access mode corresponding to the first device), the first device is in a scanning state, that is, the first device scans broadcast information. When the first device obtains, through scanning, the first broadcast information sent by the second device, it is considered that the first device receives the first broadcast information sent by the second device.

Because the first device is in the scanning state, the first device may receive, within third duration, the first broadcast information sent by the second device.

For example, the third duration may be predefined or preset in a communication system, and the communication system may be, for example, a GT-LE system or another possible short-range communication system. Alternatively, the third duration may be an empirical value obtained through testing. Alternatively, the third duration may be set by using a corresponding configuration (for example, a profile). Alternatively, the third duration is indicated by the second device to the first device.

Optionally, in this case, the first device may further obtain, through scanning, broadcast information sent by another device. For a manner in which the first device processes the broadcast information sent by the another device, refer to the manner in which the first device processes the first broadcast information sent by the second device. Details are not described herein again.

In some embodiments, the second device may send the first broadcast information through one to three (or more) specified broadcast channels. In this case, the first broadcast information may be carried in a basic broadcast frame.

In some other embodiments, the second device may send the first broadcast information through a common data channel. In this case, the first broadcast information may be carried in a basic broadcast frame and an extended broadcast frame.

For example, the basic broadcast frame may be generally transmitted on a broadcast channel. The extended broadcast frame may be generally transmitted on a data channel.

In a design, an auxiliary pointer (Auxiliary Pointer, AuxPtr) of the basic broadcast frame may indicate frequency, clock, and physical layer information (for example, a used channel bandwidth includes 1 MHz, 2 MHz, or 4 MHz) of an extended broadcast frame. For example, when the first broadcast information is carried in a basic broadcast frame, the second device sends the first broadcast information in three basic broadcast frames (that is, broadcast channels). In this case, if the first broadcast information needs to be carried in an extended broadcast frame, auxiliary pointers AuxPtr of the three basic broadcast frames should indicate a same extended broadcast frame.

In this embodiment of this application, a channel bandwidth may be understood as a symbol (symbol) rate, that is, the channel bandwidth may be understood as a quantity of symbols transmitted per unit of time. For example, that the channel bandwidth includes 1 MHz, 2 MHz, or 4 MHz may be understood as follows: The symbol rate includes 1 M symbol/s (a quantity of symbols transmitted per second is 1 M), 2 M symbol/s (a quantity of symbols transmitted per second is 2 M), or 4 M symbol/s (a quantity of symbols transmitted per second is 4 M).

For example, the first broadcast information may indicate at least one of the following: attribute information of the second device, identification information of a device capable of requesting access, or capability information of the second device.

Attribute information indicates an attribute of a device sending the attribute information, for example, whether the device sending the attribute information is a primary node (or a G node) or a secondary node (or a T node).

A manner in which the attribute information indicates whether the device sending the attribute information is a primary node or a secondary node is not limited in this embodiment of this application. For example, the attribute information may use "0" to indicate that the device sending the attribute information is a primary node, and use " 1" to indicate that the device sending the attribute information is a secondary node. For example, the attribute information may use " 1 " to indicate that the device sending the attribute information is a primary node, and use "0" to indicate that the device sending the attribute information is a secondary node.

For example, in Case 11, the attribute information of the second device indicates that the second device is a primary node.

The identification information of a device capable of requesting access identifies an identity of a device capable of requesting to establish a connection to the second device. For example, the identification information of a device capable of requesting access may include a media access control (media access control address, MAC) address of the device capable of requesting access.

For example, the capability information of the second device indicates at least one of the following: a modulation scheme supported by the second device, a channel bandwidth supported by the second device, whether the second device supports channel coding, or a channel coding type supported by the second device.

For example, the modulation scheme supported by the second device may include a gauss frequency shift keying (gauss frequency shift keying, GFSK) modulation scheme and/or a phase shift keying (phase shift keying, PSK) modulation scheme, or the like.

For example, the channel bandwidth supported by the second device may include a channel bandwidth of each frequency hopping channel in a frequency hopping manner. For another example, the channel bandwidth supported by the second device may include a total channel bandwidth supported by the second device.

When the first device receives the first broadcast information sent by the second device, the first device determines whether to perform S320. Specifically, when the first broadcast information indicates the identification information of a device capable of requesting access, and the first device determines that the identification information of a device capable of requesting access includes or indicates an identifier of the first device, it is considered that the broadcast type indicated by the first broadcast information is connectable, and the first device performs S320. Alternatively, when the first device determines, according to a rule or relationship, that the first device is capable of requesting to access the second device, the first device determines to perform S320.

S320: The first device sends a first access request.

For example, the first access request includes at least one of the following: identification information of the first device, identification information of the second device to be accessed by the first device, or capability information of the first device.

The identification information of the first device identifies an identity of the first device. For example, the identification information of the first device may include a MAC address of the first device.

Optionally, the identification information of the first device in S320 may be understood as the identification information of the first device that is to access the second device.

In this embodiment of this application, the first device that is to access the second device may be understood as follows: The second device may serve as a to-be-accessed device, waiting for the first device to request to perform access. The identification information of the second device identifies an identity of the second device. For example, the identification information of the second device may include a MAC address of the second device.

In this embodiment of this application, the second device to be accessed by the first device may be understood as follows: The first device may serve as an accessing device, to request to access the second device. Optionally, the identification information of the second device in S320 may be alternatively replaced with identification information of a first target device. For example, the first target device includes all devices that the first device is capable of requesting to access.

For example, the capability information of the first device includes at least one of the following: a modulation scheme supported by the first device, a channel bandwidth supported by the first device, whether the first device supports channel coding, or a channel coding type supported by the first device.

For example, the modulation scheme supported by the first device may include a GFSK modulation scheme and/or a PSK modulation scheme, or the like.

For example, the channel bandwidth supported by the first device may include a channel bandwidth of each frequency hopping channel in a frequency hopping manner. For another example, the channel bandwidth supported by the first device may include a total channel bandwidth supported by the first device.

For example, the channel coding type supported by the first device includes a polar codes coding scheme, a Reed-Solomon codes (Reed-Solomon codes, RS) coding scheme, a binary coded Hollerith (binary coded Hollerith, BCH) coding scheme, or the like.

When the second device receives the first access request from the first device, the second device determines whether to perform S330. Specifically, when the first access request indicates the identification information of the second device, the second device performs S330. Alternatively, when the second device determines, according to a rule or relationship, that the second device is capable of accepting the first access request of the first device, the second device performs S330.

S330: The second device sends first response information for the first access request. Correspondingly, the first device receives the first response information that is for the first access request and that is from the second device.

The first response information includes parameter information used for connection establishment.

The parameter information used for connection establishment may be understood as parameter information required for connection establishment and required in a connection process. The parameter information is not specifically limited in this application.

For example, the parameter information includes information indicating a target time-frequency resource, and the target time-frequency resource is a time-frequency resource used by the second device to send first information.

In this embodiment of this application, the target time-frequency resource may include a time domain resource and/or a frequency domain resource.

In some embodiments, the first information includes control information and/or data information.

For example, the control information may include synchronization information, and the synchronization information is used for synchronization establishment (direct current bias compensation, automatic gain control, or the like) between the first device and the second device. Additionally/Alternatively, the control information may include resource allocation (or link time description) information of a connection link between the first device and the second device (for example, a period of the link (event), time offset, duration of the link (event) in each period of the link (event), a quantity of repetitions of the link (event) in the period, and a priority); and link parameter information, for example, a link type (unicast, reliable multicast, semi-reliable multicast, or the like) and/or a quantity of sending packets in each direction (a GT direction and/or a TG direction) of the connection link, or the like. Additionally/Alternatively, the control information may include scheduling information, and the scheduling information may be information about a link resource negotiated by a primary node and a secondary node, link resource information (a symbol rate, or the like) of a primary node and a secondary node, or the like.

In some embodiments, the first information may include parameter change information (a change period, a time-frequency resource, effective time, or the like) of the first information, and the parameter change information of the first information indicates to change a parameter of the first information.

For example, the parameter information includes at least one of the following: sending period information of the first information, sending time information of the first information, sending frequency information of the first information, where the frequency information indicates a sending frequency of the first information and/or a frequency hopping interval of the first information, or identification information of the first information.

Optionally, the frequency information used for sending of the first information may be specified by a communication protocol.

The sending period information of the first information indicates a sending period of the first information.

In an example, the sending time information of the first information may indicate a sending moment of the first information.

In another example, the sending time information of the first information may indicate a sending offset amount of the first information, and the offset amount is an offset amount between a sending moment and a reference moment.

For example, the reference moment may be a moment at which the second device sends response information for an access request. The sending offset amount of the first information is an offset amount between a sending moment of the first information and a sending moment of the response information of the second device for the access request.

Optionally, the reference moment may be a preset moment, that is, a default moment. Alternatively, the reference moment is indicated by time information of the first information.

It should be understood that the moment in this embodiment of this application may be a time unit. One time unit may be one symbol, one mini-slot (Mini-slot), one slot (slot), or one subframe (subframe). For example, duration of one slot in time domain may be 125 microseconds (µs) or 625 microseconds (µs). One subframe or superframe may include a plurality of slots.

In an example, the sending frequency information of the first information includes a sending frequency applicable to the first information.

For example, the sending frequency information of the first information may further indicate a sending frequency of the first information by using a frequency channel number set, that is, one frequency channel number in the frequency channel number set indicates a sending frequency of the first information. For example, the frequency channel number set (used) may be [1, 9, 10, 12, 14, 16, 19, 22, 24, 25, 28, 32, 36]. That is, sending frequencies of the first information include the 1st frequency, the 9th frequency, the 10th frequency, the 12th frequency, the 14th frequency, the 16th frequency, the 19th frequency, the 22nd frequency, the 24th frequency, the 25th frequency, the 28th frequency, the 32nd frequency, and the 36th frequency.

In another example, the sending frequency information of the first information includes a sending frequency inapplicable to the first information. In this case, a sending frequency applicable to the first information may be obtained based on the sending frequency information of the first information.

In still another example, the sending frequency information of the first information includes a sending frequency applicable to the first information and a sending frequency inapplicable to the first information.

A manner in which the sending frequency information of the first information indicates a sending frequency applicable to the first information and a sending frequency inapplicable to the first information is not limited in this embodiment of this application.

In an example, a sending frequency applicable to the first information may be indicated by "1", and a sending frequency inapplicable to the first information may be indicated by "0". For example, ChM is defined as ChM[5] = {0x02, 0x56, 0x49, 0x13, 0x11}. If ChM is converted into binary numbers, the binary numbers are 00010001 00010011 01001001 01010110 00000010. If frequencies are numbered from the 0th frequency, a sending frequency applicable to the first information may be indicated by " 1", and a sending frequency inapplicable to the first information may be indicated by "0", in this case, sending frequencies applicable to the first information include the 1st frequency, the 9th frequency, the 10th frequency, the 12th frequency, the 14th frequency, the 16th frequency, the 19th frequency, the 22nd frequency, the 24th frequency, the 25th frequency, the 28th frequency, the 32nd frequency, and the 36th frequency. In this case, the frequency channel number set (used) may be represented as [1, 9, 10, 12, 14, 16, 19, 22, 24, 25, 28, 32, 36]. A quantity (numused) of sending frequencies applicable to the first information is 13.

In an example, the sending frequency information of the first information includes a frequency hopping interval (hop) of the first information.

In another example, a frequency hopping interval of the first information may be obtained based on a sending frequency of the first information included in the sending frequency information of the first information.

In still another example, the sending frequency information of the first information includes a frequency shifting formula, and a sending frequency of the first information may be determined according to the frequency shifting formula.

For example, the frequency shifting formula is: fₙ₊₁ = (fₙ + hop) (mod 37), where hop is equal to 5, n is a time (or a moment), fₙ is a frequency channel number at an nth time (or moment), and fₙ₊₁ is a frequency channel number at an (n+1)th time (or moment).

The frequency channel number may be understood as an identifier corresponding to an actual frequency. For example, fₙ indicates which frequency is the frequency at the nth time (or moment)

For example, when fₙ = 0 (the frequency at the nth time (or moment) is the 0th frequency), fₙ₊₁ = (0 + 5)mod37, that is, the frequency at the (n+1)th time (or moment) is the 5th frequency. However, the 5th frequency is a sending frequency inapplicable to the first information. Therefore, a frequency needs to be found from a set of sending frequencies applicable to the first information. If the set (used) of sending frequencies applicable to the first information is [1, 9, 10, 12, 14, 16, 19, 22, 24, 25, 28, 32, 36], the frequency channel number at the (n+1)th time (or moment) is: used [5 mod numused] = used [5 mod13] = 16, that is, the frequency at the (n+1)th time (or moment) is the 16th frequency.

Optionally, the sending frequency information of the first information may further indicate a candidate available frequency and/or a candidate unavailable frequency.

For example, the identification information of the first information may be an access code corresponding to the first information, an address corresponding to the first information, or the like.

For example, the parameter information may further include at least one of the following: identification information of the first device, time-frequency information used for connection establishment between the second device and the first device, identification information used for connection establishment between the second device and the first device, connection timeout information, where the connection timeout information indicates connection timeout time, a modulation scheme supported by the first device, a modulation scheme supported by the second device, a channel bandwidth supported by the first device, a channel bandwidth supported by the second device, a channel bandwidth used for communication between the second device and the first device, or a modulation and coding scheme used for communication between the second device and the first device.

The time-frequency information used for connection establishment between the second device and the first device may include time-frequency information of connection establishment between the second device and the first device and/or time-frequency information of allocation for a connection between the second device and the first device.

The time-frequency information of connection establishment between the second device and the first device indicates a time domain resource and/or a frequency domain resource carrying interaction information of the second device and the first device.

The time-frequency information of allocation for a connection between the second device and the first device indicates a time domain resource and/or a frequency domain resource allocated when the second device and the first device negotiate a connection. That is, the first device and the second device negotiate, on the time domain resource and/or the frequency domain resource, a time domain resource and/or a frequency domain resource specifically included in a time domain resource and/or a frequency domain resource carrying interaction information of the second device and the first device.

In some embodiments, the time-frequency information used for connection establishment between the second device and the first device may include frequency information of connection establishment between the second device and the first device and/or frequency information of allocation for a connection between the second device and the first device.

In an example, the frequency information of connection establishment between the second device and the first device indicates a frequency of connection establishment between the second device and the first device.

A manner in which the frequency information of connection establishment between the second device and the first device indicates a frequency of connection establishment between the second device and the first device is not limited in this embodiment of this application.

For example, the frequency information of connection establishment between the second device and the first device may indicate, by using a frequency channel number set, a frequency of connection establishment between the second device and the first device.

In another example, the frequency information of connection establishment between the second device and the first device indicates a frequency hopping interval (hop) of connection establishment between the second device and the first device. The frequency of connection establishment between the second device and the first device may be determined based on the frequency hopping interval of connection establishment between the second device and the first device.

A manner in which the frequency information of connection establishment between the second device and the first device indicates a frequency hopping interval of connection establishment between the second device and the first device is not limited in this embodiment of this application.

For example, the frequency information of connection establishment between the second device and the first device may include the frequency hopping interval of connection establishment between the second device and the first device. A frequency shifting rule may be predefined by using a protocol or in another manner. For example, the rule may be defined by using a formula. In this way, the frequency of connection establishment between the second device and the first device may be determined by using the frequency hopping interval of connection establishment between the second device and the first device and the predefined frequency shifting rule.

In an example, the frequency information of allocation for a connection between the second device and the first device indicates a frequency allocated when the second device and the first device negotiate a connection.

A manner in which the frequency information of allocation for a connection between the second device and the first device indicates a frequency allocated when the second device and the first device negotiate a connection is not limited in this embodiment of this application.

For example, the frequency information of allocation for a connection between the second device and the first device may indicate, by using a frequency channel number set, a frequency allocated when the second device and the first device negotiate a connection.

In another example, the frequency information of allocation for a connection between the second device and the first device indicates a frequency hopping interval (hop) allocated when the second device and the first device negotiate a connection. The frequency allocated when the second device and the first device negotiate a connection may be determined based on the frequency hopping interval allocated when the second device and the first device negotiate a connection.

A manner in which the frequency information of allocation for a connection between the second device and the first device indicates a frequency hopping interval allocated when the second device and the first device negotiate a connection is not limited in this embodiment of this application.

For example, the frequency information of allocation for a connection between the second device and the first device may include the frequency hopping interval allocated when the second device and the first device negotiate a connection. A frequency shifting rule may be predefined by using a protocol or in another manner. In this way, the frequency allocated when the second device and the first device negotiate a connection may be determined by using the frequency hopping interval allocated when the second device and the first device negotiate a connection and the predefined frequency shifting rule.

For a part of the frequency information that is not described, refer to related descriptions of the sending frequency information of the first information in S330 in the foregoing method 300. For example, the identification information used for connection establishment between the second device and the first device may be an access code or a connection ID used for connection establishment between the second device and the first device, and the second device and the first device establish a connection by using the access code or the connection ID.

For example, in a subsequent process of establishing a connection between the first device and the second device, when the connection timeout time indicated by the connection timeout information is exceeded, and the first device and the second device cannot communicate normally (for example, the second device does not receive, within the connection timeout time, data sent by the first device), it indicates that the established connection is unstable, and a connection needs to be re-established.

Optionally, the second device may perform indication by using one or more bytes, for example, indicate a period for sending the first information by using three bytes, and/or indicate time information for sending the first information by using four bytes, and/or indicate an offset amount for sending the first information by using two bytes, and/or indicate connection timeout information by using eight bytes, and/or indicate frequency information for sending the first information by using six bytes, and/or indicate time-frequency information of connection establishment between the second device and the first device by using six bytes.

In an example, the channel bandwidth used for communication between the second device and the first device may include 1 MHz, 2 MHz, 4 MHz, or the like.

Optionally, the method 300 further includes S340 and S350.

S340: The second device determines a target time-frequency resource, where the target time-frequency resource is used for sending of the first information.

The target time-frequency resource used for sending of the first information is indicated by the foregoing parameter information. For related descriptions of the first information, refer to corresponding descriptions in S330. Details are not described herein again.

S350: The second device sends the first information on the target time-frequency resource determined in S340.

Correspondingly, the first device determines, based on the parameter information in S330, a target time-frequency resource used for receiving of the first information, to receive the first information on the corresponding target time-frequency resource.

Optionally, the method 300 further includes S360.

S360: Establish a connection between the first device and the second device.

In a process of establishing a connection between the first device and the second device, the second device may configure a corresponding resource for the first device.

In some implementations, after the first device and the second device establish a connection for the first time, the second device may store the identifier of the first device, so that the second device directly establishes a connection to the first device when subsequently establishing a connection again.

A sequence of S360, and S340 and S350 is not limited in this application.

Optionally, in some embodiments, after S320 and before S340, S370 may be further performed.

S370: The second device feeds back acknowledgment (acknowledgment, ACK) information or negative acknowledgment (Negative acknowledgment, NACK) information to the first device. The ACK information indicates that the second device accepts the access request of the first device, and the NACK information indicates that the second device does not accept the access request of the first device.

Optionally, the ACK information or the NACK information may be carried in the first response information for the first access request.

In S370, if the second device feeds back the ACK information to the first device, after S370, S340 to S360 may be further performed. In S370, if the second device feeds back the NACK information to the first device, after S370, the first device and the second device no longer perform any step of the method 300.

Optionally, in some other embodiments, after S320 and before S330, the second device may further feed back NACK information to the first device. The NACK information indicates that the second device does not accept the access request of the first device. In an embodiment in which the second device feeds back the NACK to the first device, the first device and the second device no longer perform any step of the method 300.

Optionally, the method 300 further includes S380. A sequence of S380, and S340 to S370 is not limited in this application.

S380: The first device sends feedback information to the second device. Correspondingly, the second device receives the feedback information from the first device.

In an example, the feedback information indicates whether the first device receives the response information that is for the access request and that is sent by the second device. In another example, the feedback information indicates whether the first device accepts the parameter information that is configured by the second device and that is used for connection establishment. For example, the feedback information indicates that the first device accepts a modulation scheme configured by the second device for the first device.

A problem of an access conflict between the first device and the second device can be resolved by using the foregoing feedback information.

Optionally, in embodiments in Case 11, there may be a plurality of first devices, and there may be one second device. All the plurality of first devices perform the method 300. In this case, target access modes of the plurality of first devices may be the same or may be different. This is not limited in this application.

In another example, in Case 12, the second device attempts to establish a connection to the first device based on a first access mode in the target access modes, and the first device attempts to establish a connection to the second device based on a second access mode in the target access modes. In this case, the second device is a primary node, and the first device is a secondary node.

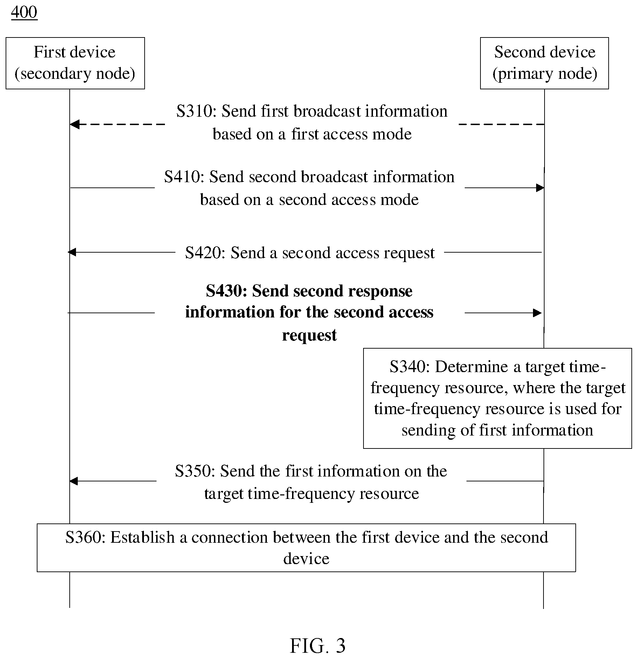

For example, FIG. 3 is a schematic flowchart of an example of another access method 400 according to an embodiment of this application. As shown in FIG. 3, the method 400 includes the following steps.

S310: A second device sends first broadcast information based on a first access mode (an example of a target access mode corresponding to the second device). The first broadcast information indicates a broadcast type, and the broadcast type indicates whether a connection can be established.

In some embodiments, the second device may periodically send the first broadcast information based on the first access mode.

Because a first device establishes a connection to another device based on a second access mode (an example of a target access mode corresponding to the first device), the first device is in a broadcasting state, that is, the first device does not scan broadcast information, and it may be considered that the first device does not receive the first broadcast information sent by the second device. Therefore, the first device does not receive, within third duration (an example of second preset duration), the first broadcast information sent by the second device. In addition, the first device does not send an access request to the second device, and the second device does not receive an access request from the first device. Therefore, the second device does not receive, within first duration (an example of first preset duration), a first access request from the first device.

For example, the first duration may be predefined or preset in a communication system, and the communication system may be, for example, a GT-LE system or another possible short-range communication system. Alternatively, the first duration may be an empirical value obtained through testing. Alternatively, the first duration may be set by using a corresponding configuration (for example, a profile).

In some embodiments, if the first device does not receive, within the third duration, the first broadcast information sent by the second device, the first device may first switch the target access mode corresponding to the first device from the second access mode to the first access mode, and the first device changes from the broadcasting state to a scanning state and scans broadcast information. In this case, the target access mode (the first access mode) corresponding to the second device is not switched, and the second device is always in a broadcasting state (corresponding to Case C2 described above). Then, the first device and the second device establish a connection to each other by using the first access mode as the target access mode. For a specific process of establishing a connection, refer to descriptions of steps in the foregoing method 300. Details are not described herein again.

In some other embodiments, if the second device does not receive, within the first duration, the first access request from the first device, the second device may first switch the target access mode corresponding to the second device from the first access mode to the second access mode, and the second device changes from the broadcasting state to a scanning state and scans broadcast information. In this case, the target access mode (the second access mode) corresponding to the first device is not switched, and the first device is always in the broadcasting state (corresponding to Case C1 described above). Then, the second device and the first device establish a connection to each other by using the second access mode as the target access mode. A specific process of establishing a connection is as follows.

Because the first device establishes a connection to another device based on the second access mode, the first device is in the broadcasting state, that is, the first device performs S410.

S410: The first device sends second broadcast information based on the second access mode. The second broadcast information indicates a broadcast type, and the broadcast type indicates whether a connection can be established.

In some embodiments, the first device may periodically send the second broadcast information based on the second access mode.

Because the second device has changed from the broadcasting state to the scanning state, the second device may scan broadcast information. Therefore, the second device may receive, within seventh duration, the second broadcast information sent by the first device.

For example, the seventh duration may be predefined or preset in a communication system, and the communication system may be, for example, a GT-LE system. Alternatively, the seventh duration may be an empirical value obtained through testing. Alternatively, the seventh duration may be set by using a corresponding configuration (for example, a profile). Alternatively, the seventh duration is indicated by the second device to the first device.

For example, the second broadcast information indicates at least one of the following: attribute information of the first device, identification information of a device capable of requesting access, where the device capable of requesting access is a device capable of requesting to establish a connection to the first device, or capability information of the first device.

For the attribute information and the identification information of a device capable of requesting access, refer to related descriptions in S310 in the foregoing method 300. Details are not described herein again.

For example, in Case 12, the attribute information of the first device indicates that the first device is a secondary node.

For the capability information of the first device, refer to related descriptions in S320 in the foregoing method 300. Details are not described herein again.

For how the second broadcast information is sent, refer to related descriptions of how the first broadcast information is sent in S310 in the foregoing method 300. Details are not described herein again.

When the second device receives the second broadcast information sent by the first device, the second device determines whether to perform S420. Specifically, when the second broadcast information indicates the identification information of a device capable of requesting access, and the second device determines that the identification information of a device capable of requesting access indicates an identifier of the second device, it is considered that the broadcast type indicated by the second broadcast information is connectable, and the second device performs S420. Alternatively, when the second device determines, according to a rule or relationship, that the second device is capable of requesting to access the first device, the second device may determine to perform S420.

S420: The second device sends a second access request to the first device. Correspondingly, the first device receives the second access request sent by the second device.

For example, the second access request includes parameter information used for connection establishment.

For related descriptions of the parameter information, refer to related descriptions of the parameter information in S330. Details are not described herein again.

When the first device receives the second access request from the second device, the first device determines whether to perform S430. Specifically, when the second access request indicates identification information of a to-be-accessed device, and the first device determines that the identification information of a to-be-accessed device in the second access request indicates an identifier of the first device, the first device performs S430. Alternatively, when the first device determines, according to a rule or relationship, that the first device is capable of accepting the second access request of the second device, the first device performs S430.

S430: The first device sends second response information for the second access request. Correspondingly, the second device receives the second response information that is for the second access request and that is from the first device.

For example, the second response information includes at least one of the following: identification information of the first device, identification information of the second device that is to access the first device, or capability information of the first device.

Optionally, the identification information of the first device in S430 may be understood as the identification information of the first device to be accessed by the second device.

In this embodiment of this application, the first device to be accessed by the second device may be understood as follows: The second device may serve as an accessing device, to request to access the first device. For the identification information of the first device, the identification information of the second device, and the capability information of the first device, refer to related descriptions in S320 in the foregoing method 300. Details are not described herein again.

In this embodiment of this application, the second device that is to access the first device may be understood as follows: The first device may serve as a to-be-accessed device, waiting for the second device to request to perform access.

Optionally, the identification information of the second device in S430 may be alternatively replaced with identification information of a second target device. For example, the second target device includes all devices that are capable of accessing the first device.

Optionally, the second device determines, based on the second response information from the first device, whether to perform S340 to S380. Specifically, when the second response information indicates the identification information of the second device, S340 to S380 are performed. Alternatively, when the second device determines, according to a rule or relationship, that the second device is capable of establishing a connection to the first device, S340 to S380 are performed.

For S340 to S380, refer to the foregoing related descriptions. Details are not described herein again.

Optionally, in embodiments in Case 12, there may be a plurality of second devices, and there may be one first device. All the plurality of second devices perform the method 400. In this case, target access modes of the plurality of second devices may be the same or may be different. This is not limited in this application.

In still another example, in Case 13, the second device attempts to establish a connection to the first device based on a second access mode in the target access modes, and the first device attempts to establish a connection to the second device based on a first access mode in the target access modes. In this case, the second device is a primary node, and the first device is a secondary node.

Because the second device attempts to establish a connection to the first device based on the second access mode in the target access modes, and the first device attempts to establish a connection to the second device based on the first access mode in the target access modes, both the first device and the second device are in a scanning state, that is, neither the second device nor the first device broadcasts broadcast information. Therefore, it may be considered that the first device does not receive, within third duration, first broadcast information sent by the second device. The second device does not receive, within eighth duration, second broadcast information sent by the first device.

For example, the eighth duration may be predefined or preset in a communication system, and the communication system may be, for example, a GT-LE system or another possible short-range communication system. Alternatively, the eighth duration may be an empirical value obtained through testing. Alternatively, the eighth duration may be set by using a corresponding configuration (for example, a profile). Alternatively, the eighth duration is indicated by the second device to the first device.

In some embodiments, if the second device does not receive, within the eighth duration, the second broadcast information sent by the first device, the second device may first switch the target access mode corresponding to the second device from the second access mode to the first access mode, and the second device changes from the scanning state to a broadcasting state and broadcasts the first broadcast information. In this case, the target access mode (the first access mode) corresponding to the first device is not switched, and the first device is always in the scanning state (corresponding to Case D1 described above). Then, the first device and the second device establish a connection to each other by using the first access mode as the target access mode. For a specific process of establishing a connection, refer to descriptions of steps in the foregoing method 300. Details are not described herein again.

In some other embodiments, if the first device does not receive, within the third duration, the first broadcast information sent by the second device, the first device may first switch the target access mode from the first access mode to the second access mode, and the first device changes from the scanning state to a broadcasting state and broadcasts the first broadcast information. In this case, the target access mode (the second access mode) corresponding to the second device is not switched, and the second device is always in the scanning state (corresponding to Case D2 described above). Then, the first device and the second device establish a connection to each other by using the second access mode as the target access mode. A specific process of establishing a connection is similar to a solution of the following method 500. A difference is as follows: The steps performed by a first device in the following method 500 are performed by the second device, and the steps performed by a second device in the following method 500 are performed by the first device. For other parts that are not described, refer to descriptions of steps in the following method 500. Details are not described herein again.

In still another example, in Case 21, both the second device and the first device establish a connection to each other by using a second access mode as the target access mode. In this case, the second device is a secondary node, and the first device is a primary node.

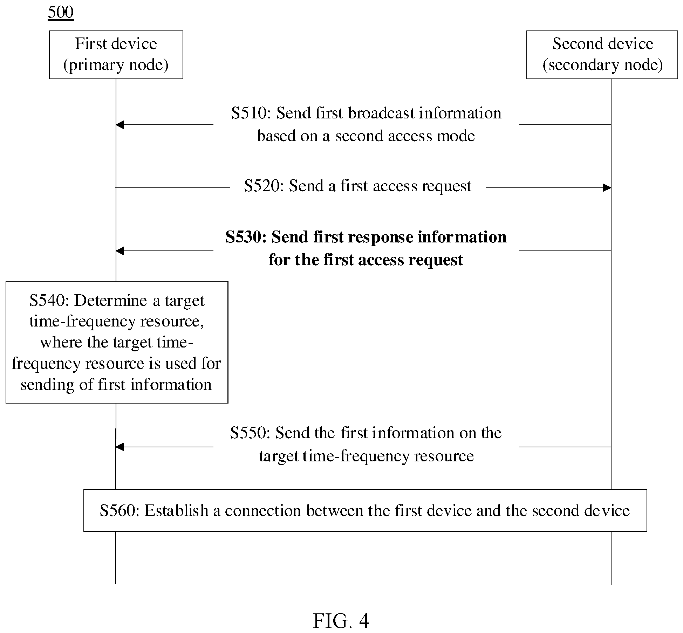

For example, FIG. 4 is a schematic flowchart of an example of an access method 500 according to an embodiment of this application. As shown in FIG. 4, the method 500 includes the following steps.

S510: A second device sends first broadcast information based on a second access mode (an example of a target access mode corresponding to the second device). The first broadcast information indicates a broadcast type, and the broadcast type indicates whether a connection can be established.

In some embodiments, the second device may periodically send the first broadcast information based on the second access mode.

In some embodiments, because a first device establishes a connection to another device based on the second access mode (an example of a target access mode corresponding to the first device), the first device is in a scanning state. When the first device obtains, through scanning, the first broadcast information sent by the second device, it is considered that the first device receives the first broadcast information sent by the second device.

Because the first device is in the scanning state, the first device may receive, within fourth duration (an example of second preset duration), the first broadcast information sent by the second device.

For example, the fourth duration may be predefined or preset in a communication system, and the communication system may be, for example, a GT-LE system or another possible short-range communication system. Alternatively, the fourth duration may be an empirical value obtained through testing. Alternatively, the fourth duration may be set by using a corresponding configuration (for example, a profile). Alternatively, the fourth duration is indicated by the second device to the first device.

For descriptions of the first broadcast information, refer to related descriptions in S310 in the foregoing method 300. Details are not described herein again.

When the first device receives the first broadcast information sent by the second device, the first device determines whether to perform S520. Specifically, when the first broadcast information indicates identification information of a device capable of requesting access, and the first device determines that the identification information of a device capable of requesting access indicates an identifier of the first device, it is considered that the broadcast type indicated by the first broadcast information is connectable, and the first device performs S520. Alternatively, when the first device determines, according to a rule or relationship, that the first device is capable of requesting to access the second device, the first device may determine to perform S520.

S520: The first device sends a first access request.

The first access request in S520 includes parameter information used for connection establishment.

For related descriptions of the parameter information, refer to related descriptions in S330. Details are not described herein again.

When the second device receives the first access request from the first device, the second device performs S530.

S530: The second device sends first response information for the first access request. Correspondingly, the first device receives the first response information that is for the first access request and that is from the second device.

For example, the first response information in S530 includes at least one of the following: identification information of the second device to be accessed by the first device, identification information of the first device, capability information of the second device, or answer information indicating whether to accept the first access request.

The first response information carries the identification information of the first device and/or the identification information of the second device to be accessed by the first device, so that the first device determines whether the first device is capable of accessing the second device, or the first device determines whether the first response information is response information for the first access request. This avoids a conflict problem that a plurality of second devices establish connections to one first device simultaneously, improves efficiency in establishing the connection, and shortens duration for establishing the connection.

The identification information of the second device identifies an identity of the second device. For example, the identification information of the second device may include a MAC address of the second device.

Optionally, the identification information of the second device in S530 may be replaced with identification information of the third target device described above. For example, the third target device includes all devices that are capable of accessing the second device.

For the capability information of the second device, refer to related descriptions in S310 in the foregoing method 300. Details are not described herein again. Optionally, the identification information of the first device in S530 may be understood as the identification information of the first device that is to access the second device.

For the identification information of the first device, refer to related descriptions in S320 in the foregoing method 300. Details are not described herein again.

Optionally, when the second device accepts the first access request of the first device, the answer information may be ACK information. When the second device does not accept the first access request of the first device, the answer information may be NACK information.

Optionally, the answer information indicating whether to accept the access request and the first response information may be separately sent by the second device to the first device.

Optionally, the first device determines, based on the first response information from the second device, whether to perform S540 and S550. Specifically, when the first response information indicates the identification information of the first device, S530, and S540 to S560 are performed. Alternatively, when the first device determines, according to a rule or relationship, that the first device is capable of establishing a connection to the second device, S540 to S560 are performed. S540 and S550 are described below in detail.

S540: The first device determines a target time-frequency resource, where the target time-frequency resource is used for sending of first information.

S550: The first device sends the first information to the second device on the target time-frequency resource determined in S540.

Correspondingly, the second device determines, based on the parameter information in S520, a target time-frequency resource used for receiving of the first information, to receive the first information on the corresponding target time-frequency resource.

S560: Establish a connection between the first device and the second device.

In a process of establishing a connection between the first device and the second device, the second device may configure a corresponding resource for the first device.

In some implementations, after the first device and the second device establish a connection for the first time, the first device may store an identifier of the second device, so that the first device directly establishes a connection to the second device when subsequently establishing a connection again.

A sequence of S560, and S540 and S550 is not limited in this application.

Optionally, the method 500 may further include S380 described above. A sequence of S380, and S540 to S560 is not limited in this application.

Optionally, in embodiments in Case 21, there may be a plurality of second devices, and there may be one first device. All the plurality of second devices perform the method 500. In this case, target access modes of the plurality of second devices may be the same or may be different. This is not limited in this application.

In still another example, in Case 22, the second device attempts to establish a connection to the first device based on a second access mode in the target access modes, and the first device attempts to establish a connection to the second device based on a first access mode in the target access modes. In this case, the second device is a secondary node, and the first device is a primary node.

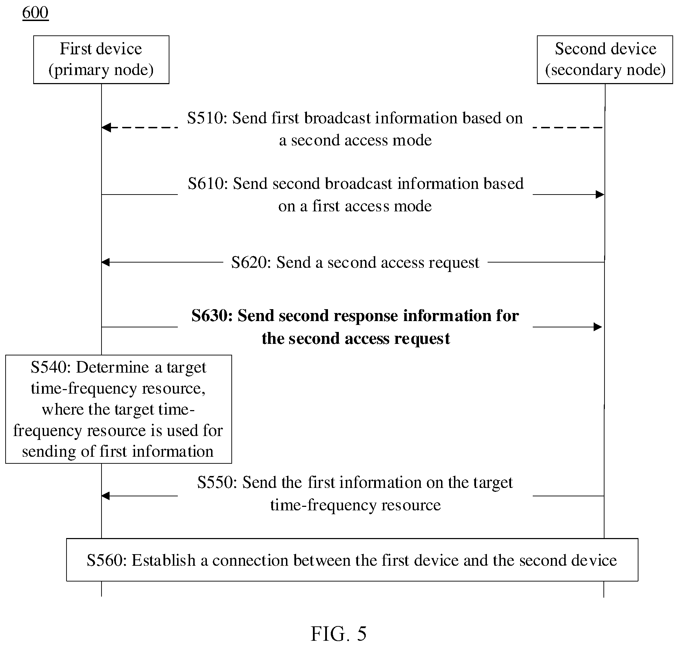

For example, FIG. 5 is a schematic flowchart of an example of another access method 600 according to an embodiment of this application. As shown in FIG. 5, the method 600 includes the following steps.

S510: A second device sends first broadcast information based on a second access mode (an example of a target access mode corresponding to the second device). The first broadcast information indicates a broadcast type, and the broadcast type indicates whether a connection can be established.

In some embodiments, the second device may periodically send the first broadcast information based on the second access mode.

Because a first device establishes a connection to another device based on a first access mode (an example of a target access mode corresponding to the first device), the first device is in a broadcasting state, that is, the first device does not scan broadcast information, and it may be considered that the first device does not receive the first broadcast information sent by the second device. Therefore, the first device does not receive, within fourth duration (an example of second preset duration), the first broadcast information sent by the second device. In addition, the first device does not send an access request to the second device, and the second device does not receive an access request from the first device. Therefore, the second device does not receive, within second duration (an example of the second preset duration), a first access request from the first device.

For example, the second duration may be predefined or preset in a communication system, and the communication system may be, for example, a GT-LE system or another possible short-range communication system. Alternatively, the second duration may be an empirical value obtained through testing. Alternatively, the second duration may be set by using a corresponding configuration (for example, a profile).

For example, the fourth duration may be predefined or preset in a communication system, and the communication system may be, for example, a GT-LE system or another possible short-range communication system. Alternatively, the fourth duration may be an empirical value obtained through testing. Alternatively, the fourth duration may be set by using a corresponding configuration (for example, a profile).

In some embodiments, if the first device does not receive, within the fourth duration, the first broadcast information sent by the second device, the first device may first switch the target access mode corresponding to the first device from the first access mode to the second access mode, and the first device changes from the broadcasting state to a scanning state and scans broadcast information. In this case, the target access mode (the second access mode) corresponding to the second device is not switched, and the second device is in a broadcasting state (corresponding to Case C1 described above). Then, the first device and the second device establish a connection to each other by using the second access mode as the target access mode. For a specific process of establishing a connection, refer to descriptions of steps in the foregoing method 500. Details are not described herein again.

In some other embodiments, if the second device does not receive, within the second duration, the first access request from the first device, the second device may first switch the target access mode corresponding to the second device from the second access mode to the first access mode, and the second device changes from the broadcasting state to a scanning state and scans broadcast information. In this case, the target access mode (the first access mode) corresponding to the first device is not switched, and the first device is always in the broadcasting state (corresponding to Case C2 described above). Then, the first device and the second device establish a connection to each other by using the first access mode as the target access mode. A specific process is as follows.

Because the first device establishes a connection to another device based on the first access mode, the first device is in the broadcasting state, that is, the first device performs S610.

S610: The first device sends second broadcast information based on the first access mode. The second broadcast information indicates a broadcast type, and the broadcast type indicates whether a connection can be established.

Correspondingly, because the second device has changed from the broadcasting state to the scanning state, the second device may receive, within eighth duration, the second broadcast information sent by the first device.

For descriptions of the second broadcast information, refer to related descriptions in S410 in the foregoing method 400. Details are not described herein again.

When the second device receives the second broadcast information sent by the first device, the second device determines whether to perform S620. Specifically, when the second broadcast information indicates identification information of a device capable of requesting access, and the second device determines that the identification information of a device capable of requesting access indicates an identifier of the second device, it is considered that the broadcast type indicated by the second broadcast information is connectable, and the second device performs S620. Alternatively, when the second device determines, according to a rule or relationship, that the second device is capable of requesting to access the first device, the second device may determine to perform S620.

S620: The second device sends a second access request.

For example, the second access request in S620 includes at least one of the following: identification information of the second device that is to access the first device, identification information of the first device, or capability information of the second device.

For the identification information of the second device, the identification information of the first device, and the capability information of the second device, refer to related descriptions in S530 in the foregoing method 500. Details are not described herein again.

Optionally, the identification information of the first device in S620 may be understood as the identification information of the first device to be accessed by the second device.

Optionally, the identification information of the second device in S620 may be alternatively replaced with identification information of a fourth target device. For example, the fourth target device includes all devices that the second device is capable of accessing.

When the first device receives the second access request from the second device, the first device determines whether to perform S630. Specifically, when the second access request indicates the identification information of the first device, the first device performs S630. Alternatively, when the first device determines, according to a rule or relationship, that the first device is capable of accepting the second access request of the second device, the first device performs S630.

S630: The first device sends second response information for the second access request. Correspondingly, the second device receives the second response information that is for the second access request and that is from the first device.

For example, the second response information includes parameter information used for connection establishment.

For related descriptions of the parameter information, refer to related descriptions of the parameter information in S330. Details are not described herein again.

Optionally, in embodiments in Case 22, there may be a plurality of first devices, and there may be one second device. All the plurality of first devices perform the method 600. In this case, target access modes of the plurality of first devices may be the same or may be different. This is not limited in this application.

Optionally, the method 600 may further include S540 to S560. For descriptions of S540 to S560, refer to the foregoing descriptions. Details are not described herein again.

In another example, in Case 23, the second device attempts to establish a connection to the first device based on a first access mode in the target access modes, and the first device attempts to establish a connection to the second device based on a second access mode in the target access modes. In this case, the second device is a secondary node, and the first device is a primary node.

Because the second device attempts to establish a connection to the first device based on the second access mode in the target access modes, and the first device attempts to establish a connection to the second device based on the first access mode in the target access modes, both the first device and the second device are in a scanning state, that is, neither the second device nor the first device broadcasts broadcast information. Therefore, it may be considered that the first device does not receive, within third duration, first broadcast information sent by the second device. The second device does not receive, within eighth duration, second broadcast information sent by the first device.

In some embodiments, if the second device does not receive, within the eighth duration, the second broadcast information sent by the first device, the second device may first switch the target access mode corresponding to the second device from the first access mode to the second access mode, and the second device changes from the scanning state to a broadcasting state and broadcasts the first broadcast information. In this case, the target access mode (the second access mode) corresponding to the first device is not switched, and the second device is always in the scanning state (corresponding to Case D2 described above). Then, the first device and the second device establish a connection to each other by using the second access mode as the target access mode. For a specific process of establishing a connection, refer to descriptions of steps in the foregoing method 500. Details are not described herein again.

In some other embodiments, if the first device does not receive, within the third duration, the first broadcast information sent by the second device, the first device may first switch the target access mode corresponding to the first device from the second access mode to the first access mode, and the first device changes from the scanning state to a broadcasting state and broadcasts the first broadcast information. In this case, the target access mode (the first access mode) corresponding to the second device is not switched, and the second device is always in the scanning state (corresponding to Case D 1 described above). Then, the first device and the second device establish a connection to each other by using the first access mode as the target access mode. A specific process of establishing a connection is similar to a solution of the foregoing method 300. A difference is as follows: The steps performed by a first device in the foregoing method 300 are performed by the second device, and the steps performed by a second device in the foregoing method 300 are performed by the first device. For other parts that are not described, refer to descriptions of steps in the foregoing method 300. Details are not described herein again. An embodiment of this application provides still another access method. A difference between the access method and the access method 300 to the access method 600 is as follows: One device corresponds to one access mode.

In some embodiments, each of devices in a communication system attempts to establish a connection to another device based on one access mode (for example, a first access mode or a second access mode). In addition, in this method, because the access mode only includes one access mode, there is no switching of the access mode in the method. Therefore, switching from one access mode to another access mode, as described in the access method 300 to the access method 600, is inapplicable to this method.

In some other embodiments, only one access mode (for example, a first access mode or a second access mode) is configured in a communication system. In an implementation, a user may change the configured access mode through a related setting on a device. In another implementation, after a second device and a first device establish a connection to each other, the primary node in the second device and the first device may indicate, in subsequent broadcast information or dedicated information of the node, an access mode subsequently used. In this way, when the second device and the first device re-establish a connection to each other, the access mode is adjusted. In this way, if the access mode configured in the communication system remains unchanged, one device in the communication system may establish a connection to another device for a plurality of times based on a same access mode. In this case, switching of the access mode does not exist, and switching from one access mode to another access mode, as described in the access method 300 to the access method 600, is inapplicable to this method. If the access mode configured in the communication system changes, a device in the communication system needs to switch the access mode to a changed access mode, and establish a connection to another device based on the changed access mode. In this case, switching from one access mode to another access mode, as described in the access method 300 to the access method 600, is applicable to this method.

For other descriptions of the method, refer to related descriptions of the method 300 and the method 500. Details are not described herein again.

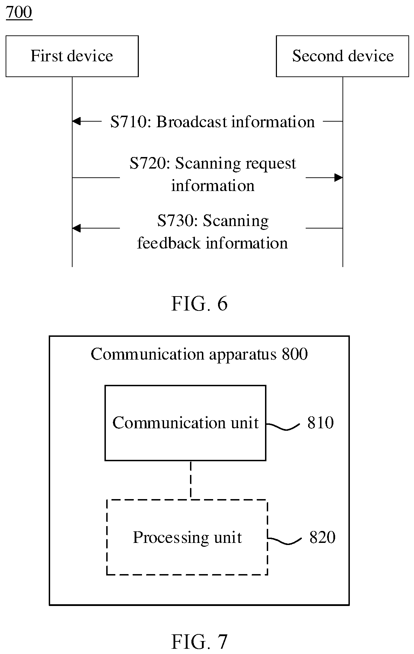

A method for discovering each other by a primary node and a secondary node according to an embodiment of this application is described below with reference to FIG. 6.

In the following method 700, broadcast information indicates a broadcast type, and the broadcast type indicates whether discovery can be implemented.

If the broadcast type indicates that discovery (scanning) can be implemented, a device (for example, a first device or a second device) receiving the broadcast information may be discovered, based on the broadcast information or extended broadcast information indicated by the broadcast information, by a device (for example, a second device or a first device) sending the broadcast information. A specific manner may be as follows: The device sending the broadcast information receives (or detects) a discovery (scanning) request in a second time resource window corresponding to (for a manner of corresponding, refer to the manner of corresponding of the first time resource window described above) the broadcast information or the extended broadcast information indicated by the broadcast information. The device (for example, the first device or the second device) that receives the broadcast information and expects to be discovered by the device (service) sending the broadcast information may send a discovery (scanning) request in the second time resource window, and the device sending the broadcast information sends discovery (scanning) response information, so that discovery by the device sending the broadcast information is implemented. Because it may be considered that the device receiving the broadcast information has discovered the device (or the service) sending the broadcast information, when the device receiving the broadcast information is discovered by the device sending the broadcast information, it may be considered that bidirectional discovery is implemented. Certainly, the two devices may complete a discovery process through one interaction, or may complete a discovery process through multiple interactions.

If the broadcast type indicates that discovery cannot be implemented, a device (for example, a first device or a second device) receiving the broadcast information cannot be discovered, based on the broadcast information or extended broadcast information indicated by the broadcast information, by a device (for example, a second device or a first device) sending the broadcast information. The device sending the broadcast information does not receive (or, does not detect) a connection request in a second time resource window corresponding to the broadcast information or the extended broadcast information indicated by the broadcast information, or the second time resource window does not exist (that is, is undefined). The device receiving the broadcast information does not send, based on the broadcast information or the extended broadcast information indicated by the broadcast information, a discovery (scanning) request.

A difference between that a broadcast type indicated by broadcast information indicates that discovery (scanning) can be implemented and that a broadcast type indicated by broadcast information indicates that a connection can be established is as follows: When broadcast information indicates that a connection can be established, a device sending the broadcast information and a device receiving the broadcast information may establish a connection, and may transmit information to each other after the connection is established. When broadcast information indicates that discovery (scanning) can be implemented, a device sending the broadcast information and a device receiving the broadcast information can only discover each other, and it is unknown whether to establish a connection. For example, FIG. 6 is a schematic flowchart of a method 700 for discovering each other by a primary node and a secondary node according to an embodiment of this application. As shown in FIG. 6, the method 700 includes the following steps.

S710: A second device sends broadcast information. In this case, the second device is in a broadcasting state.

Correspondingly, a first device is in a scanning state. If the first device obtains, through scanning, the broadcast information of the second device, it is considered that the first device receives the broadcast information from the second device.

A broadcast type indicated by the broadcast information in S710 indicates whether discovery can be implemented. The broadcast information in S710 and the first broadcast information in S310 in the foregoing method 300 are different in an indicated broadcast type. For other content included in the broadcast information in S710 and a transmission manner, refer to related descriptions of the first broadcast information in S310 in the foregoing method 300. Details are not described herein again.

After the first device receives the broadcast information, the first device performs S720.

S720: The first device sends scanning request (scan_request) information to the second device, where the scanning request information is used to request the second device to provide more information about the second device and/or information about a service (for example, a service) that can be provided or required by the second device.

Optionally, the scanning request information is further used to declare existence of the first device to the second device. After the second device receives the scanning request information, the second device may know existence of the first device through the scanning request information.

After receiving the scanning request information, the second device may send scanning response information to the first device. The first device receives the scanning response information, and both the first device and the second device know existence of each other. Therefore, the second device and the first device may discover each other.

Optionally, the second device may further perform S730.

S730: The second device sends scanning feedback (scan_response) information to the first device. The scanning feedback information indicates that the second device has received the scanning request information. Correspondingly, the first device receives the scanning feedback information from the second device.

In some embodiments, the second device is a primary node, and the first device is a secondary node. In an initial state, the first device (the secondary node) is in a scanning state, and the second device (the primary node) is in a broadcasting state. After the first device (the secondary node) obtains, through scanning, the broadcast information sent by the second device (the primary node), the first device (the secondary node) requests the second device (the primary node) to provide more information about the second device and/or information about a service (for example, a service) that can be provided or required by the second device, and then the second device (the primary node) sends the scanning response information to the first device (the secondary node). Finally, the first device (the secondary node) and the second device (the primary node) may discover each other.

In some other embodiments, the second device is a secondary node, and the first device is a primary node. In an initial state, the first device (the primary node) is in a scanning state, and the second device (the secondary node) is in a broadcasting state. After the first device (the primary node) obtains, through scanning, the broadcast information sent by the second device (the secondary node), the first device (the primary node) requests the second device (the secondary node) to provide more information about the second device and/or information about a service (for example, a service) that can be provided or required by the second device, and then the second device (the secondary node) sends the scanning response information to the first device (the primary node). Finally, the first device (the primary node) and the second device (the secondary node) may discover each other.

Optionally, in some embodiments, if the first device does not obtain, through scanning within fifth duration, the broadcast information, the first device may automatically change from the scanning state to a broadcasting state. This can avoid a case in which the first device is in the scanning state for a long time but still cannot discover the second device, thereby reducing power consumption of the first device, and improving efficiency of discovering each other by the first device and the second device.

Optionally, in some other embodiments, if the second device does not receive, within sixth duration, the scanning request, the second device may automatically change from the broadcasting state to a scanning state. This can avoid a case in which the first device is in the scanning state for a long time but still cannot discover the second device, thereby reducing power consumption of the first device, and improving efficiency of discovering each other by the first device and the second device.

For example, the fifth duration or the sixth duration may be predefined or preset in a communication system, and the communication system may be, for example, a GT-LE system or another possible short-range communication system. Alternatively, the fifth duration or the sixth duration may be an empirical value obtained through testing. Alternatively, the fifth duration or the sixth duration may be set by using a corresponding setting.

The access method in embodiments of this application is described above with reference to FIG. 2 and FIG. 5. The method for discovering each other by a primary node and a secondary node is described with reference to FIG. 6. A communication apparatus in an embodiment of this application is described below with reference to FIG. 7. It should be understood that descriptions of the communication apparatus correspond to descriptions of the access method. Therefore, for a part that is not described in detail, refer to the foregoing descriptions of the access method.

FIG. 7 is a schematic diagram of a structure of a communication apparatus according to an embodiment of this application. As shown in FIG. 7, the communication apparatus 800 includes a communication unit 810.

In an implementation, the second device in the method 200 to the method 600 includes the communication apparatus 800.

The communication unit 810 is configured to send first broadcast information based on a target access mode, where the first broadcast information indicates that a broadcast type is connectable. The communication unit 810 is further configured to: if a first access request from a first device is received within first preset duration, send first response information for the first access request, where the target access mode is an access mode in an access mode set, and the access mode set includes at least two access modes.

In an example, if the target access mode is a first access mode in the access mode set, the first response information includes parameter information used for connection establishment, and the first access request includes at least one of the following: identification information of the first device, identification information of the communication apparatus 800 to be accessed by the first device, or capability information of the first device.

In another example, if the target access mode is a second access mode in the access mode set, the first access request includes parameter information used for connection establishment, and the first response information includes at least one of the following: identification information of the communication apparatus 800 to be accessed by the first device, identification information of the first device, capability information of the communication apparatus 800, or answer information indicating whether to accept the first access request.

In another example, the first preset duration is first duration, and the target access mode is the first access mode in the access mode set. The communication unit 810 is further configured to: if the first access request is not received within the first duration, scan broadcast information based on a second access mode in the access mode set; if second broadcast information from the first device is obtained through scanning, send a second access request, where the second broadcast information indicates that a broadcast type is connectable; and receive second response information that is for the second access request and that is from the first device.

The second access request includes parameter information used for connection establishment. The second response information includes at least one of the following: identification information of the first device, identification information of the communication apparatus 800 that is to access the first device, or capability information of the first device.

In still another example, the communication unit 810 is further configured to: if the first access request is not received within second duration, scan broadcast information based on a first access mode in the access mode set; if second broadcast information from the first device is obtained through scanning, send a second access request, where the second broadcast information indicates that a broadcast type is connectable; and receive second response information that is for the second access request and that is from the first device.

The first preset duration is the second duration, the target access mode is the second access mode in the access mode set, and the second response information includes parameter information used for connection establishment. The second access request includes at least one of the following: identification information of the communication apparatus 800 that is to access the first device, identification information of the first device, or capability information of the communication apparatus 800.

Optionally, in each example, the parameter information includes at least one of the following: a sending period of first information, sending time information of the first information, sending frequency information of the first information, where the frequency information indicates a sending frequency of the first information and/or a frequency hopping interval of the first information, or identification information of the first information. Optionally, the parameter information further includes at least one of the following: time-frequency information used for connection establishment between the communication apparatus 800 and the first device, identification information used for connection establishment between the communication apparatus 800 and the first device, connection timeout information, where the connection timeout information indicates connection timeout time, a modulation scheme supported by the first device, a modulation scheme supported by the communication apparatus 800, a channel bandwidth supported by the first device, a channel bandwidth supported by the communication apparatus 800, a channel bandwidth used for communication between the communication apparatus 800 and the first device, or a modulation and coding scheme used for communication between the communication apparatus 800 and the first device.

The first broadcast information indicates at least one of the following: attribute information of the communication apparatus 800, identification information of a device capable of requesting access, where the device capable of requesting access is a device capable of requesting to establish a connection to the communication apparatus 800, or capability information of the communication apparatus 800.

The second broadcast information indicates at least one of the following: attribute information of the first device, identification information of a device capable of requesting access, where the device capable of requesting access is a device capable of requesting to establish a connection to the first device, or capability information of the first device.

The capability information of the first device includes at least one of the following: a modulation scheme supported by the first device, a channel bandwidth supported by the first device, whether the first device supports channel coding, or a channel coding type supported by the first device.

The capability information of the communication apparatus 800 includes at least one of the following: a modulation scheme supported by the communication apparatus 800, a channel bandwidth supported by the communication apparatus 800, whether the communication apparatus 800 supports channel coding, or a channel coding type supported by the communication apparatus 800.

Optionally, the communication unit 810 is further configured to receive first information on a target time-frequency resource based on the parameter information, where the first information includes control information and/or data information, and the parameter information includes information indicating the target time-frequency resource.

The communication apparatus 800 further includes a processing unit 820, configured to establish a connection between the first device and the communication apparatus 800.

In another implementation, the first device in the method 200 to the method 600 includes the communication apparatus 800.

The communication unit 810 is configured to scan broadcast information based on a target access mode, and if first broadcast information from a second device is received within second preset duration, send first access request, where the first broadcast information indicates that a broadcast type is connectable. The communication unit 810 is further configured to receive first response information that is for the first access request and that is from the second device, where the target access mode is an access mode in an access mode set, and the access mode set includes at least two access modes.

In an example, if the target access mode is a first access mode in the access mode set, the first response information includes parameter information used for connection establishment, and the first access request includes at least one of the following: identification information of the communication apparatus 800 that is to access the second device, identification information of the second device, or capability information of the communication apparatus 800.

In another example, if the target access mode is a second access mode in the access mode set, the first access request includes parameter information used for connection establishment, and the first response information includes at least one of the following: identification information of the second device, identification information of the communication apparatus 800 that is to access the second device, capability information of the second device, or answer information indicating whether to accept the first access request.

In still another example, the second preset duration is third duration, and the target access mode is the first access mode in the access mode set. The communication unit 810 is further configured to: if the first broadcast information is not received within the third duration, send second broadcast information based on a second access mode in the access mode set, where the second broadcast information indicates that a broadcast type is connectable; and receive a second access request from the second device, and send second response information for the second access request.

The second access request includes parameter information used for connection establishment. The second response information includes at least one of the following: identification information of the communication apparatus 800 to be accessed by the second device, identification information of the second device, or capability information of the communication apparatus 800.

In still another example, the second preset duration is fourth duration, and the target access mode is the second access mode in the access mode set. The communication unit 810 is further configured to: if the first broadcast information is not received within the fourth duration, send second broadcast information based on a first access mode in the access mode set, where the second broadcast information indicates that a broadcast type is connectable; and receive a second access request from the second device, and send second response information for the second access request.

The second response information includes parameter information used for connection establishment. The second access request includes at least one of the following: identification information of the second device, identification information of the communication apparatus 800 to be accessed by the second device, or capability information of the second device.

Optionally, in each example, the parameter information includes at least one of the following: a sending period of first information, sending time information of the first information, sending frequency information of the first information, where the frequency information indicates a sending frequency of the first information and/or a frequency hopping interval of the first information, or identification information of the first information. Optionally, the parameter information further includes at least one of the following: time-frequency information used for connection establishment between the second device and the communication apparatus 800, identification information used for connection establishment between the second device and the communication apparatus 800, connection timeout information, where the connection timeout information indicates connection timeout time, a modulation scheme supported by the communication apparatus 800, a modulation scheme supported by the second device, a channel bandwidth supported by the communication apparatus 800, a channel bandwidth supported by the second device, a channel bandwidth used for communication between the second device and the communication apparatus 800, or a modulation and coding scheme used for communication between the second device and the communication apparatus 800.

The first broadcast information indicates at least one of the following: attribute information of the second device, identification information of a device capable of requesting access, where the device capable of requesting access is a device capable of requesting to establish a connection to the second device, or capability information of the second device.

The second broadcast information indicates at least one of the following: attribute information of the communication apparatus 800, identification information of a device capable of requesting access, where the device capable of requesting access is a device capable of requesting to establish a connection to the communication apparatus 800, or capability information of the communication apparatus 800.

The capability information of the communication apparatus 800 includes at least one of the following: a modulation scheme supported by the communication apparatus 800, a channel bandwidth supported by the communication apparatus 800, whether the communication apparatus 800 supports channel coding, or a channel coding type supported by the communication apparatus 800.

The capability information of the second device includes at least one of the following: a modulation scheme supported by the second device, a channel bandwidth supported by the second device, whether the second device supports channel coding, or a channel coding type supported by the second device.

Optionally, the communication unit 810 is further configured to send first information on a target time-frequency resource, where the first information includes control information and/or data information, and the parameter information includes information indicating the target time-frequency resource.

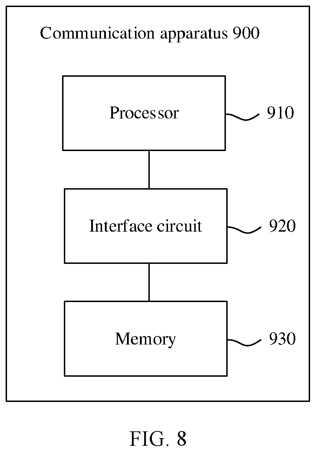

The communication apparatus 800 further includes a processing unit 820, configured to establish a connection between the communication apparatus 800 and the second device. FIG. 8 is a schematic diagram of a structure of another communication apparatus according to an embodiment of this application.

As shown in FIG. 8, the communication apparatus 900 includes at least one processor 910 and an interface circuit 920.

Optionally, the communication apparatus 900 may further include a memory 930, and the memory 930 is configured to store a program.

For example, the memory 930 may be a read-only memory (read only memory, ROM), a static storage device, a dynamic storage device, or a random access memory (random access memory, RAM). The memory 930 may store a program. When the program stored in the memory 930 is executed by the processor 910, the processor 910 and the interface circuit 920 may be configured to perform steps performed by the first device in the access method 300 to the access method 600 provided in embodiments of this application, or may be configured to perform steps performed by the second device in the access method 300 to the access method 600 provided in embodiments of this application. In other words, the processor 910 may obtain stored instructions from the memory 930 through the interface circuit 920, to perform the steps performed by the first device in the access method 300 to the access method 600 provided in embodiments of this application, or perform the steps performed by the second device in the access method 300 to the access method 600 provided in embodiments of this application.

For example, the processor 910 may be a general purpose central processing unit (central processing unit, CPU), a microprocessor, an application-specific integrated circuit (application specific integrated circuit, ASIC), a graphic processing unit (graphic processing unit, GPU), or one or more integrated circuits, and is configured to execute a related program, to implement a function that needs to be performed by a unit in any implementations of the communication apparatus 900 provided in this embodiment of this application, or perform the steps performed by the first device in the access method 300 to the access method 600 provided in embodiments of this application, or perform the steps performed by the second device in the access method 300 to the access method 600 provided in embodiments of this application.

For example, the processor 910 may alternatively be an integrated circuit chip and has a signal processing capability. In an implementation process, the steps performed by the first device in the access method 300 to the access method 600 provided in embodiments of this application or the steps performed by the second device in the access method 300 to the access method 600 provided in embodiments of this application may be completed by using an integrated logical circuit of hardware in the processor or an instruction in a form of software.

Optionally, the processor 910 may alternatively be a general purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component, and may implement or perform the steps performed by the first device in the access method 300 to the access method 600 provided in embodiments of this application or the steps performed by the second device in the access method 300 to the access method 600 provided in embodiments of this application, and steps performed by the first device or steps performed by the second device in a logical block diagram. The general purpose processor may be a microprocessor, or the processor may be any conventional processor or the like. The steps performed by the first device in the access method 300 to the access method 600 provided in embodiments of this application or the steps performed by the second device in the access method 300 to the access method 600 provided in embodiments of this application, and the steps performed by the first device or the steps performed by the second device in the logical block diagram may be directly performed by a hardware decoding processor, or may be performed by using a combination of hardware and software modules in the decoding processor. A software module may be located in a mature storage medium in the art, for example, a random access memory, a flash memory, a read-only memory, a programmable read-only memory, an electrically erasable programmable memory, a register, or the like. The storage medium is located in the memory. The processor reads information in the memory, and completes, in combination with hardware of the processor, a function that needs to be performed by a unit in any implementations of the communication apparatus 900 provided in this embodiment of this application, or performs the steps performed by the first device in the access method 300 to the access method 600 provided in embodiments of this application or the steps performed by the second device in the access method 300 to the access method 600 provided in embodiments of this application, and the steps performed by the first device or the steps performed by the second device in the logical block diagram.

For example, the interface circuit 920 may use a transceiver apparatus, for example, but not limited to a transceiver, to implement communication between the apparatus and another device or a communication network. The interface circuit 920 may be, for example, a communication interface.

The descriptions of procedures corresponding to the foregoing accompanying drawings have respective focuses. For a part of a procedure that is not described in detail, refer to related descriptions of another procedure.

An embodiment of this application further provides a computer-readable storage medium. The computer-readable storage medium has program instructions. When the program instructions are directly or indirectly executed, the foregoing access method is implemented.

An embodiment of this application further provides a computer program product including instructions. When the computer program product runs on a computing device, the computing device is enabled to perform the foregoing access method, or the computing device is enabled to implement a function of the foregoing communication apparatus.

An embodiment of this application further provides a chip, including at least one processor and an interface circuit. The interface circuit is configured to provide program instructions or data for the at least one processor, and the at least one processor is configured to execute the program instructions, to implement the foregoing access method.

An embodiment of this application further provides a terminal. The terminal includes an apparatus configured to perform the foregoing access method.

Further, the terminal may be an intelligent transportation device (a vehicle or an unmanned aerial vehicle), a smart home device, an intelligent manufacturing device, an intelligent wearable device, a robot, or the like. The intelligent transportation device may be, for example, an automated guided vehicle (automated guided vehicle, AGV) or an unmanned transportation vehicle.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, all or some of the procedure or functions according to embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by a computer, or a data storage device, for example, a server or a data center integrating one or more usable media, or the like. The usable medium may be a magnetic medium (for example, a floppy disk, a hard disk, or a magnetic tape), an optical medium (for example, a DVD), or a semiconductor medium. The semiconductor medium may be a solid-state drive.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, apparatus embodiments described above are merely examples. For example, division into the units is merely logical function division and there may be other division in actual implementation. For example, a plurality of units or components may be combined or integrated into another system, or some features may be ignored or not performed. In addition, the displayed or discussed mutual couplings or direct couplings or communicative connections may be implemented by using some interfaces. Indirect couplings or communicative connections between apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An access method, wherein the access method comprises:
sending first broadcast information based on a target access mode, wherein the first broadcast information indicates that a broadcast type is connectable; and
if a first access request from a first device is received within first preset duration, sending first response information for the first access request, wherein
the target access mode is an access mode in an access mode set, and the access mode set comprises at least two access modes.

2. The access method according to claim 1, wherein the at least two access modes correspond to different scenarios.

3. The access method according to claim 1 or 2, wherein the target access mode is a first access mode in the access mode set; and
the first response information comprises parameter information used for connection establishment.

4. The access method according to any one of claims 1 to 3, wherein the target access mode is the first access mode in the access mode set, and the first access request comprises at least one of the following:
identification information of the first device;
identification information of a second device to be accessed by the first device; or
capability information of the first device.

5. The access method according to any one of claims 1 to 4, wherein the first preset duration is first duration, the target access mode is the first access mode in the access mode set, and the access method further comprises:
if the first access request is not received within the first duration, scanning broadcast information based on a second access mode in the access mode set;
if second broadcast information from the first device is obtained through scanning, sending a second access request, wherein the second broadcast information indicates that a broadcast type is connectable; and
receiving second response information that is for the second access request and that is from the first device.

6. The access method according to claim 5, wherein the second access request comprises parameter information used for connection establishment.

7. The access method according to claim 5 or 6, wherein the second response information comprises at least one of the following:
the identification information of the first device;
the identification information of the second device that is to access the first device; or
the capability information of the first device.

8. The access method according to any one of claims 3 to 7, wherein the access method further comprises:
sending first information on a target time-frequency resource, wherein the first information comprises control information and/or data information, and the parameter information comprises information indicating the target time-frequency resource.

9. The access method according to claim 1 or 2, wherein the target access mode is a second access mode in the access mode set; and
the first access request comprises parameter information used for connection establishment.

10. The access method according to any one of claims 1, 2, and 9, wherein the target access mode is the second access mode in the access mode set, and the first response information comprises at least one of the following:
identification information of a second device to be accessed by the first device;
identification information of the first device;
capability information of the second device; or
answer information indicating whether to accept the first access request.

11. The access method according to any one of claims 1, 2, 9, and 10, wherein the first preset duration is second duration, the target access mode is the second access mode in the access mode set, and the access method further comprises:
if the first access request is not received within the second duration, scanning broadcast information based on a first access mode in the access mode set;
if second broadcast information from the first device is obtained through scanning, sending a second access request, wherein the second broadcast information indicates that a broadcast type is connectable; and
receiving second response information that is for the second access request and that is from the first device.

12. The access method according to claim 11, wherein the second response information comprises parameter information used for connection establishment.

13. The access method according to claim 11 or 12, wherein the second access request comprises at least one of the following:
the identification information of the second device that is to access the first device;
the identification information of the first device; or
the capability information of the second device.

14. The access method according to any one of claims 9 to 13, wherein the access method further comprises:
receiving first information on a target time-frequency resource based on the parameter information, wherein the first information comprises control information and/or data information, and the parameter information comprises information indicating the target time-frequency resource.

15. An access method, wherein the access method comprises:
scanning broadcast information based on a target access mode;
if first broadcast information from a second device is received within second preset duration, sending first access request, wherein the first broadcast information indicates that a broadcast type is connectable; and
receiving first response information that is for the first access request and that is from the second device, wherein
the target access mode is an access mode in an access mode set, and the access mode set comprises at least two access modes.

16. The access method according to claim 15, wherein the at least two access modes correspond to different scenarios.

17. The access method according to claim 15 or 16, wherein the target access mode is a first access mode in the access mode set; and
the first response information comprises parameter information used for connection establishment.

18. The access method according to any one of claims 15 to 17, wherein the target access mode is the first access mode in the access mode set, and the first access request comprises at least one of the following:
identification information of a first device that is to access the second device;
identification information of the second device; or
capability information of the first device.

19. The access method according to any one of claims 15 to 18, wherein the second preset duration is third duration, the target access mode is the first access mode in the access mode set, and the access method further comprises:
if the first broadcast information is not received within the third duration, sending second broadcast information based on a second access mode in the access mode set, wherein the second broadcast information indicates that a broadcast type is connectable; and
receiving a second access request from the second device, and sending second response information for the second access request.

20. The access method according to claim 19, wherein the second access request comprises parameter information used for connection establishment.

21. The access method according to claim 19 or 20, wherein the second response information comprises at least one of the following:
the identification information of the first device to be accessed by the second device;
the identification information of the second device; or
the capability information of the first device.

22. The access method according to any one of claims 17 to 21, wherein the access method further comprises:
receiving first information on a target time-frequency resource based on the parameter information, wherein the first information comprises control information and/or data information, and the parameter information comprises information indicating the target time-frequency resource.

23. The access method according to claim 15 or 16, wherein the target access mode is a second access mode in the access mode set; and
the first access request comprises parameter information used for connection establishment.

24. The access method according to any one of claims 15, 16, and 23, wherein the target access mode is the second access mode in the access mode set, and the first response information comprises at least one of the following:
identification information of the second device;
identification information of a first device that is to access the second device;
capability information of the second device; or
answer information indicating whether to accept the first access request.

25. The access method according to any one of claims 15, 16, 23, and 24, wherein the second preset duration is fourth duration, the target access mode is the second access mode in the access mode set, and the access method further comprises:
if the first broadcast information is not received within the fourth duration, sending second broadcast information based on a first access mode in the access mode set, wherein the second broadcast information indicates that a broadcast type is connectable; and
receiving a second access request from the second device, and sending second response information for the second access request.

26. The access method according to claim 25, wherein the second response information comprises parameter information used for connection establishment.

27. The access method according to claim 25 or 26, wherein the second access request comprises at least one of the following:
the identification information of the second device;
the identification information of the first device to be accessed by the second device; or
the capability information of the second device.

28. The access method according to any one of claims 23 to 27, wherein the access method further comprises:
sending first information on a target time-frequency resource, wherein the first information comprises control information and/or data information, and the parameter information comprises information indicating the target time-frequency resource.

29. The access method according to any one of claims 8, 14, 22, and 28, wherein the parameter information comprises at least one of the following:
sending period information of the first information;
sending time information of the first information;
sending frequency information of the first information, wherein the frequency information indicates a sending frequency of the first information and/or a frequency hopping interval of the first information; or
identification information of the first information.

30. The access method according to any one of claims 3 to 14 and claims 17 to 29, wherein the parameter information further comprises at least one of the following:
time-frequency information used for connection establishment between the second device and the first device;
identification information used for connection establishment between the second device and the first device;
connection timeout information, wherein the connection timeout information indicates connection timeout time;
a modulation scheme supported by the first device;
a modulation scheme supported by the second device;
a channel bandwidth supported by the first device;
a channel bandwidth supported by the second device;
a channel bandwidth used for communication between the second device and the first device; or
a modulation and coding scheme used for communication between the second device and the first device.

31. The access method according to any one of claims 1 to 30, wherein the first broadcast information indicates at least one of the following:
attribute information of the second device;
identification information of a device capable of requesting access, wherein the device capable of requesting access is a device capable of requesting to establish a connection to the second device; or
the capability information of the second device.

32. The access method according to any one of claims 5, 11, 19, and 25, wherein the second broadcast information indicates at least one of the following:
attribute information of the first device;
identification information of a device capable of requesting access, wherein the device capable of requesting access is a device capable of requesting to establish a connection to the first device; or
capability information of the first device.

33. The access method according to any one of claims 4, 7, 18, 21, and 32, wherein the capability information of the first device comprises at least one of the following:
a modulation scheme supported by the first device;
a channel bandwidth supported by the first device;
whether the first device supports channel coding; or
a channel coding type supported by the first device.

34. The access method according to any one of claims 10, 13, 24, 27, and 31, wherein the capability information of the second device comprises at least one of the following:
a modulation scheme supported by the second device;
a channel bandwidth supported by the second device;
whether the second device supports channel coding; or
a channel coding type supported by the second device.

35. The access method according to any one of claims 1 to 34, wherein the access method further comprises:
establishing a connection between the first device and the second device.

36. A communication apparatus, comprising at least one memory and at least one processor, wherein the at least one memory is configured to store a program, and the at least one processor is configured to run the program, to implement the access method according to any one of claims 1 to 35.

37. A computer-readable storage medium, wherein the computer-readable storage medium stores a program or instructions, and when the program or the instructions are executed, a computer is enabled to perform the access method according to any one of claims 1 to 35.

38. A chip, comprising at least one processor and an interface circuit, wherein the interface circuit is configured to provide program instructions or data for the at least one processor, and the at least one processor is configured to execute the program instructions, to implement the access method according to any one of claims 1 to 35.

39. A terminal, wherein the terminal comprises an apparatus configured to perform the access method according to any one of claims 1 to 35 or the communication apparatus according to claim 36.
